(19) **Europäisches Patentamt / European Patent Office / Office européen des brevets**

(11) **EP 4 198 688 B1**

(12) **EUROPEAN PATENT SPECIFICATION**

(45) Date of publication and mention
of the grant of the patent:
**22.10.2025 Bulletin 2025/43**

(21) Application number: **20952050.1**

(22) Date of filing: **07.09.2020**

(51) International Patent Classification (IPC):
**G06F 1/3215** (2019.01)     **G06F 1/3231** (2019.01)
**G06F 1/324** (2019.01)     **G06F 1/3234** (2019.01)
**G06F 1/3287** (2019.01)

(52) Cooperative Patent Classification (CPC):
**G06F 1/324; G06F 1/3215; G06F 1/3231;**
**G06F 1/3265; G06F 1/3287;** Y02D 10/00

(86) International application number:
**PCT/CN2020/113852**

(87) International publication number:
**WO 2022/047808 (10.03.2022 Gazette 2022/10)**

(54) **IMAGE PROCESSING APPARATUS, ELECTRONIC DEVICE, AND IMAGE PROCESSING METHOD**

BILDVERARBEITUNGSVORRICHTUNG, ELEKTRONISCHE VORRICHTUNG UND
BILDVERARBEITUNGSVERFAHREN

APPAREIL DE TRAITEMENT D'IMAGE, DISPOSITIF ÉLECTRONIQUE ET PROCÉDÉ DE
TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023 Bulletin 2023/25**

(73) Proprietor: **Huawei Technologies Co., Ltd.
Shenzhen, Guangdong 518129 (CN)**

(72) Inventors:
• **LIU, Long
Shenzhen, Guangdong 518129 (CN)**
• **WU, Xuecheng
Shenzhen, Guangdong 518129 (CN)**

• **YUAN, Zhengjun
Shenzhen, Guangdong 518129 (CN)**

(74) Representative: **Gill Jennings & Every LLP
The Broadgate Tower
20 Primrose Street
London EC2A 2ES (GB)**

(56) References cited:
EP-A1- 3 404 508     WO-A1-2020/077540
CN-A- 105 094 268     CN-A- 105 302 548
CN-A- 105 632 491     CN-A- 105 700 660
CN-A- 110 297 665     US-A1- 2013 223 635
US-A1- 2020 042 683

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the field of electronic technologies, and in particular, to an image processing apparatus, an electronic device, and an image processing method.

**BACKGROUND**

Always on display (AOD) is currently an important function of an electronic device. AOD is usually applied to an electronic device in which an organic light-emitting diode (OLED) screen is used. In AOD, a single-pixel self-luminous feature of the OLED screen is used, and only some pixels on the OLED screen may be turned on to display a clock and some common information. In this way, each time a user views the clock or the common information, the user does not need to press a power button to turn on the entire OLED screen, to help save power of the electronic device.

Currently, for most electronic devices that support always on display, an always on display wakeup function is used to wake up a system. Always on display wakeup means to switch the electronic device from an always on display state to a normal working state. When the electronic device supports always on display wakeup, on an always on display screen of the electronic device, in addition to some steady-on areas used to display information, there are some areas that are always in a working state (which may be or may not be turned on); and the user wakes up the electronic device by double tapping these areas. In this case, power consumption of always on display wakeup in a standby state not only includes power consumption of the steady-on areas used to display content, but also additionally includes power consumption of the some screen areas to detect a double-tap operation performed by the user. As the user pays attention to a larger amount of information, an increasingly large amount of content is displayed through AOD, and the content is always displayed on the screen when the electronic device is in the standby state. Consequently, power consumption of the electronic device in the standby state is increased, and power consumption of always on display wakeup is also increased.

In addition to an application scenario of always on display, a solution of waking up an electronic device without user intervention is always attempted to develop in this field. In a possible solution, when the electronic device is in a standby state, some components in the electronic device may be set to an always on (AO) state, and image information from a camera is waited for processing. After the camera collects the image information, the some components wake up the entire electronic device by recognizing the image information, to reduce system power consumption. However, power consumption control of the components in the AO state is always unsatisfactory. Regardless of whether the electronic device is in the standby state or a normal working state, the components in the AO state need to consume much power. Therefore, how to make a proper design to further reduce the power consumption of the some components becomes a problem.

CN 110297665 A describes an equipment working mode switching method and a camera. The method comprises: using a depth image collected by a depth camera for static image detection, and when the image static condition is met and the background of the equipment runs without tasks, controlling the equipment to enter a low-power-consumption mode; when the equipment enters a low-power-consumption mode, according to the depth image collected by the depth camera in a low power consumption mode, carrying out static image detection; when the image static condition is not met, recognizing user operation according to the depth image collected by the depth camera and the RGB image collected by the RGB camera, and when it is recognized that the user operation is awakening operation, awakening the equipment, and controlling the equipment to enter a normal working mode.

US 2020/042683 Al describes a mobile terminal which includes a main body, a touch screen disposed on a front side of the main body, a first sensor disposed on the front side to sense the approach of an object to the main body in a locked state, a second sensor disposed in proximity to the first sensor to be driven in either one of a sleep mode and an active mode so as to acquire a vein image of an object that has approached the first sensor in the active mode, and a controller configured to perform vein authentication using the vein image acquired through the second sensor.

**SUMMARY**

In view of this, this application provides an image processing apparatus, an electronic device, and an image processing method, to reduce power consumption of the image processing apparatus (for example, an electronic device). The present invention is described by the features disclosed in the independent claims. Additional embodiments are defined in the dependent claims.

According to a first aspect, this application provides an image processing apparatus. The image processing apparatus may include a first clock generation system, a second clock generation system, a low power system, and a high power system. The first clock generation system may generate a first clock signal at a first frequency. The second clock generation system may generate a second clock signal at a second frequency. The first frequency is less than the second frequency. When the image processing apparatus is in a standby state, the low power system may process image information based on the first clock signal, and trigger the image processing apparatus to switch to a normal working state. When the image processing apparatus is in the normal working state, the low power system may work based on one of the first clock signal and the second clock signal, and the high power system may work based on the second clock signal.

In the design, the low power system is disposed in the image processing apparatus, and the low power system uses the first clock signal at a relatively low frequency in the standby state to implement standby recognition, so as to help reduce power consumption when the image processing apparatus performs wakeup in the standby state. In addition, in this solution, a clock signal used by the low power system after being woken up, that is, in the normal working state, may be one of the low-frequency first clock signal and the high-frequency second clock signal, and is not always the high-frequency second clock signal. This makes a power consumption control solution more flexible, and helps further reduce power consumption of the image processing apparatus. Therefore, it may be learned that in this application, clock signals used by the low power system in different states (namely, the standby state and the normal working state) are properly designed, to help reduce power consumption of the low power system and even power consumption of the entire image processing apparatus.

In a possible design, the low power system includes a plurality of first functional components, and the plurality of first functional components are located in a standby non-power-off area. In this way, even if the image processing apparatus is in the standby state, the plurality of first functional components may still work, to help implement a standby wakeup function in the standby state by using the plurality of first functional components.

In a possible design, the high power system includes a plurality of second functional components, and the plurality of second functional components are located in a standby power-off area. In this way, when the image processing apparatus is in the standby state, the plurality of second functional components do not work, to help reduce power consumption in the standby state.

In a possible design, the plurality of first functional components may include a controller, an image signal processor, and an artificial intelligence processor, and the plurality of second functional components may include a central processing unit. When the image processing apparatus is in the standby state, the image signal processor may process the image information to obtain processed image information. When the image processing apparatus is in the standby state, the artificial intelligence processor may extract a feature of the processed image information, and determine whether the feature matches a target feature, to obtain a matching result. When the image processing apparatus is in the standby state, the controller may send a trigger signal to the central processing unit based on the matching result. The central processing unit may switch the image processing apparatus to the normal working state in response to the trigger signal. In this design, the plurality of first functional components in the low power system and the plurality of second functional components in the high power system may cooperate with each other, to implement a standby wakeup function of the image processing apparatus in an image recognition manner. In addition, in this manner, the artificial intelligence processor determines whether an image meets a standby wakeup feature. Therefore, this further helps improve professionalism and energy efficiency of image recognition.

In a possible design, the triggering the image processing apparatus to switch to a normal working state may include: controlling a screen to be turned on. In this way, in this manner, the screen is directly turned on, so that an operation is directly performed on an application on the screen, to achieve relatively good user experience.

In a possible design, the plurality of first functional components may further include an interface, and when the image processing apparatus is in the standby state, the interface may receive the image information from an image capture device, and transmit the image information to the image signal processor.

In a possible design, the plurality of first functional components may further include a memory, and the memory may store the processed image information when the image processing apparatus is in the standby state. In this way, the artificial intelligence processor can directly invoke the processed image information stored in the memory, to execute an image recognition algorithm.

In a possible design, the image processing apparatus may further include a frequency converter system, the frequency converter system may receive the first clock signal from the first clock generation system, perform frequency conversion on the first clock signal to generate a first clock signal obtained through frequency conversion, and provide the first clock signal obtained through frequency conversion to the low power system, and the frequency converter system may further receive the second clock signal from the second clock generation system, perform frequency conversion on the second clock signal to generate a second clock signal obtained through frequency conversion, and provide the second clock signal obtained through frequency conversion to the low power system or the high power system. In this way, the frequency converter system can convert the first clock signal or the second clock signal into a clock signal required by each first functional component or each second functional component, so that the clock signal better meets a requirement of each first functional component or each second functional component.

In a possible design, the frequency converter system may include a plurality of frequency converters, and the plurality of frequency converters respectively correspond to the plurality of first functional components. Each frequency converter may receive the first clock signal, and output the first clock signal obtained through frequency conversion to a corresponding first functional component, or receive the second clock signal, and output the second clock signal obtained through frequency conversion to a corresponding first functional component. In this design, the frequency converter corresponding to each first functional component is multiplexed for the first clock signal and the second clock signal. Therefore, one frequency converter can support frequency modulation operations on the two clock signals, and then provide the two clock signals to the corresponding first functional component. This manner helps reduce design costs of the image processing apparatus.

In a possible design, there is further at least one frequency converter in the plurality of frequency converters, and when at least one corresponding first functional component stops working, the at least one frequency converter may disable an output of the at least one frequency converter, to reduce power consumption.

In a possible design, a frequency of the first clock signal obtained through frequency conversion is greater than the first frequency. In this case, there is further at least one frequency converter in the plurality of frequency converters, and when at least one corresponding first functional component is idle, the at least one frequency converter may output the clock signal at the first frequency to the at least one first functional component, and when the at least one first functional component works, output the first clock signal obtained through frequency conversion to the at least one first functional component, to reduce power consumption.

In a possible design, when the image processing apparatus is in the normal working state, the low power system may work based on the first clock signal in a first working mode, and work based on the second clock signal in a second working mode. In this way, in this manner, a clock signal that matches a working mode is used to implement a service, and this helps select a proper clock signal based on a requirement of the working mode. In this manner, flexibility of power consumption control can be improved, and power consumption of the image processing apparatus in the normal working state can be reduced.

In a possible design, when the image processing apparatus is in the standby state, the second clock generation system is turned off. In this way, when in the standby state, the image processing apparatus may work by using only the low-frequency first clock signal, to help reduce power consumption of the image processing apparatus in the standby state.

According to a second aspect, this application provides an electronic device, including the image processing apparatus according to any one of the designs of the first aspect and an image capture device. Optionally, the image capture device includes a camera.

According to a third aspect, this application provides an image processing method. The method is applied to an image processing apparatus, and the method includes: The image processing apparatus controls a first clock generation system to generate a first clock signal at a first frequency; and controls a second clock generation system to generate a second clock signal at a second frequency, where the first frequency is less than the second frequency; when in a standby state, the image processing apparatus may control a low power system to process image information based on the first clock signal and trigger the image processing apparatus to switch to a normal working state; and when in the normal working state, the image processing apparatus may control the low power system to work based on one of the first clock signal and the second clock signal, and control a high power system to work based on the second clock signal.

In a possible design, the low power system includes a plurality of first functional components, and the plurality of first functional components are located in a standby non-power-off area.

In a possible design, the high power system includes a plurality of second functional components, and the plurality of second functional components are located in a standby power-off area.

In a possible design, the plurality of first functional components may include a controller, an image signal processor, and an artificial intelligence processor, and the plurality of second functional components may include a central processing unit. When the image processing apparatus is in the standby state, the image processing apparatus may further control the image signal processor to process image information to obtain processed image information, control the artificial intelligence processor to extract a feature of the processed image information, and determine whether the feature matches a target feature, to obtain a matching result, control the controller to send a trigger signal to the central processing unit based on the matching result, and further control the central processing unit to switch the image processing apparatus to the normal working state in response to the trigger signal.

In a possible design, the switching the image processing apparatus to the normal working state includes: The image processing apparatus controls a screen to be turned on.

In a possible design, the plurality of first functional components may further include an interface. In this case, the image processing apparatus may further control the interface to receive the image information from an image capture device when the image processing apparatus is in the standby state, and transmit the image information to the image signal processor.

In a possible design, the plurality of first functional components may further include a memory. In this case, the image processing apparatus may further control the memory to store the processed image information when the image processing apparatus is in the standby state.

In a possible design, the image processing apparatus may further include a frequency converter system. In this case, the image processing apparatus may further control the frequency converter system to receive the first clock signal from the first clock generation system, generate, based on the first clock signal, a first clock signal obtained through frequency conversion, and provide the first clock signal obtained through frequency conversion to the low power system, and control the frequency converter system to receive the second clock signal from the second clock generation system, generate, based on the second clock signal, a second clock signal obtained through frequency conversion, and provide the second clock signal obtained through frequency conversion to the low power system or the high power system.

In a possible design, the frequency converter system may include a plurality of frequency converters, and each of the plurality of frequency converters may correspond to one of the plurality of first functional components. In this case, the image processing apparatus may further control each frequency converter to receive the first clock signal and output the first clock signal obtained through frequency conversion to the corresponding first functional component, or control each frequency converter to receive the second clock signal and output the second clock signal obtained through frequency conversion to the corresponding first functional component.

In a possible design, there is further at least one frequency converter in the plurality of frequency converters. In this case, when at least one first functional component corresponding to the at least one frequency converter stops working, the image processing apparatus may further disable an output of the at least one frequency converter.

In a possible design, a frequency of the first clock signal obtained through frequency conversion is greater than the first frequency, there is further at least one frequency converter in the plurality of frequency converters, and when at least one first functional component corresponding to the at least one frequency converter is idle, the image processing apparatus may further output the clock signal at the first frequency to the at least one first functional component, and when the at least one first functional component works, output the first clock signal obtained through frequency conversion to the at least one first functional component.

In a possible design, when the image processing apparatus is in the normal working state, the image processing apparatus may further control the low power system to work based on the first clock signal in a first working mode, and work based on the second clock signal in a second working mode.

In a possible design, when the image processing apparatus is in the standby state, the image processing apparatus may turn off the second clock generation system.

For beneficial effects of each possible design of the second aspect and the third aspect of this application, refer to the first aspect. Details are not described herein.

## BRIEF DESCRIPTION OF DRAWINGS

FIG. 1 is an example of a schematic diagram of a structure of an electronic device;
FIG. 2 is an example of a schematic diagram of a structure of an image processing apparatus according to an embodiment of this application;
FIG. 3 is an example of a schematic diagram of an overall structure of an image processing apparatus according to an embodiment of this application;
FIG. 4 is an example of a schematic diagram of a structure of a frequency converter module according to an embodiment of this application;
FIG. 5 is an example of a timing control diagram corresponding to a standby wakeup process of an image processing apparatus in one period in a standby state; and
FIG. 6 is an example of a schematic flowchart of a standby wakeup method.

## DESCRIPTION OF EMBODIMENTS

An image processing apparatus disclosed in this application may be applied to an electronic device having a camera function. In some embodiments of this application, the image processing apparatus may be an electronic device or an independent unit. When the image processing apparatus is an independent unit, the unit may be built into the electronic device, and can perform a standby wakeup function when the electronic device is in a standby state, and the electronic device is in a normal working state after being woken up. In some other embodiments of this application, the image processing apparatus may alternatively be a unit packaged into the electronic device, and is configured to implement a standby wakeup function of the electronic device. The electronic device may be a portable electronic device including a function such as a personal digital assistant and/or a music player, for example, a mobile phone, a tablet computer, a wearable device (for example, a smart watch) with a wireless communication function, or a vehicle-mounted device. An example embodiment of the portable electronic device includes but is not limited to a portable electronic device using iOS®, Android®, Microsoft®, or another operating system. The portable electronic device may alternatively be, for example, a laptop computer (Laptop) with a touch-sensitive surface (for example, a touch panel). It should be further understood that in some other embodiments of this application, the electronic device may alternatively be a desktop computer with a touch-sensitive surface (for example, a touch panel).

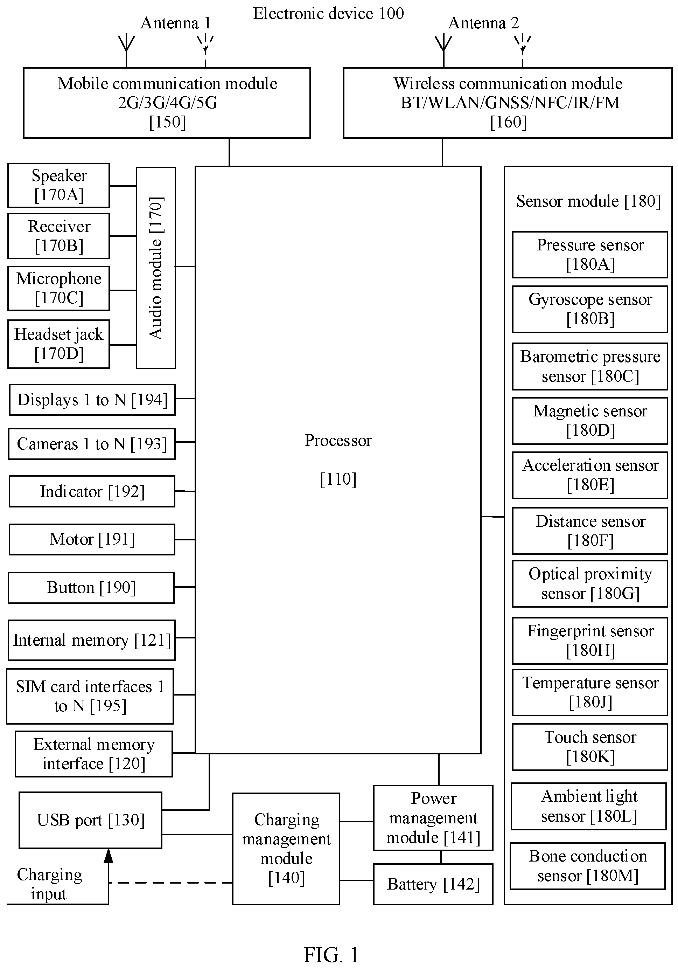

FIG. 1 is an example of a schematic diagram of a structure of an electronic device 100. It should be understood that the electronic device 100 shown in the figure is merely an example, and the electronic device 100 may include more or fewer components than those shown in the figure, may combine two or more components, or may have different component configurations. Components shown in the figure may be implemented by hardware including one or more signal processing and/or application-specific integrated circuits, software, or a combination of hardware and software.

As shown in FIG. 1, the electronic device 100 may include a processor 110, an external memory interface 120, an internal memory 121, a universal serial bus (USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. Each component in the electronic device 100 is described below in detail with reference to FIG. 1.

The processor 110 may include one or more chips, for example, may include a system-on-a-chip (SoC) or a chipset including a plurality of chips. The processor 110 may include one or more processing units. For example, the processor 110 may include a central processing unit (CPU) or an application processor (AP), and further include a modem processor, a graphics processing unit (GPU), an image signal processor ISP), a controller, a video codec, a digital signal processor (DSP), a baseband processor, and/or a neural-network processing unit (NPU). Different processing units may be independent components, or may be integrated into one or more processors. The CPU may be a nerve center and a command center of the electronic device 100. The CPU may generate an operation control signal based on instruction operation code and a time sequence signal, and complete control of instruction obtaining and instruction execution. An executed instruction includes but is not limited to an operating system program instruction or an application software program instruction. The CPU or the AP is also referred to as an application central processing unit (ACPU). The controller may include a sensor hub, configured to process data from one or more sensors. Data types output by various sensors are subsequently described in detail.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory, to avoid repeated access and shorten a waiting time of the processor 110. Therefore, processing efficiency can be improved.

In some embodiments, the processor 110 may include one or more interfaces. For example, the interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, and/or a universal serial bus (USB) port.

The MIPI interface may be configured to connect the processor 110 to a peripheral component such as the display 194 or the camera 193. The MIPI interface includes a camera serial interface (CSI), a display serial interface (DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The power management module 141 is configured to be connected to the battery 142, the charging management module 140, and the processor 110. The charging management module 140 is configured to receive a charging input from the charger. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (for example, electric leakage and impedance). In some other embodiments, the power management module 141 may alternatively be disposed in the processor 110. In some other embodiments, the power management module 141 and the charging management module 140 may alternatively be disposed in a same component.

The electronic device 100 may implement the display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the processor 110 executes program instructions to generate or change display information.

The display 194 is configured to display an image, a video, and the like. The display 194 includes a display panel. The display panel may be a liquid crystal display (LCD), an organic light-emitting diode (OLED), an active-matrix organic light emitting diode (AMOLED), a flexible light-emitting diode (FLED), a mini LED, a micro LED, a micro OLED, a quantum dot light-emitting diode (QLED), or the like. In this embodiment of this application, the display 194 may be one integrated flexible display, or may be a spliced display including two rigid screens and one flexible screen located between the two rigid screens. When an image processing method provided in embodiments of this application is run, the display 194 may display information in a standby state in response to a wakeup operation of the electronic device.

The electronic device 100 may implement the photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (CCD) or a complementary metal-oxide-semiconductor (CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193, for example, may include both a front-facing camera and a rear-facing camera.

The NPU is a neural-network (NN) computing processor, quickly processes input information by referring to a structure of a biological neural network, for example, by referring to a mode of transfer between human brain neurons, and may further continuously perform self-learning. An application such as intelligent cognition of the electronic device 100 may be implemented by using the NPU, for example, image recognition, facial recognition, speech recognition, and text understanding.

The external memory interface 120 may be configured to be connected to an external storage card, for example, a micro SD card, to extend a storage capability of the electronic device 100. The external storage card communicates with the processor 110 by using the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application program required by at least one function (for example, a voice play function or an image play function), and the like. The data storage area may store data (for example, audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (UFS). The processor 110 runs the instructions stored in the internal memory 121 and/or the instructions stored in the memory disposed in the processor, to perform various functional applications and data processing of the electronic device 100.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. The optical proximity sensor 180G may be disposed near the display, for example, at a forehead position or a chin position of the display. When performing the image processing method in this application, the electronic device 100 may first invoke the optical proximity sensor 180G to determine whether there is an object, for example, a face or a gesture, in front of a screen. After it is determined that there is an object, an image processing apparatus is invoked to perform the image processing method, so as to wake up the electronic device 100.

The ambient light sensor 180L is configured to sense ambient light brightness. The electronic device 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G. The ambient light sensor 180L may alternatively be disposed near the display, for example, at a forehead position or a chin position of the display. When performing the image processing method in this application, the electronic device 100 may first invoke the ambient light sensor 180L to determine whether light in front of the screen changes, and then invoke the optical proximity sensor 180G to determine whether there is an object in front of the screen.

Although not shown in FIG. 1, the electronic device 100 may further include a Bluetooth apparatus, a positioning apparatus, a flash, a micro projection apparatus, a near field communication (NFC) apparatus, or the like. Details are not described herein.

This application is further described below in detail with reference to the accompanying drawings. It should be noted that in the description of this application, "at least one" means one or more, and "a plurality of" means two or more. In view of this, in embodiments of the present invention, "a plurality of" may alternatively be understood as "at least two". "And/Or" is an association relationship for describing associated objects, and represents that three relationships may exist. For example, A and/or B may represent the following three cases: Only A exists, both A and B exist, and only B exists. In addition, unless otherwise specified, the character "/" usually indicates an "or" relationship between associated objects. In addition, it should be understood that in the description of this application, words such as "first" and "second" are merely used for distinguishing between description, and cannot be understood as an indication or implication of relative importance, or cannot be understood as an indication or implication of a sequence. For example, a "first clock generation system" and a "second clock generation system" are merely examples of different clock generation systems, and do not mean that the two clock generation systems have different importance degrees or priorities.

In embodiments of this application, standby wakeup means to switch an electronic device from a standby state to a working state. When the electronic device is in the standby state, although the electronic device is powered on, the electronic device does not perform substantive work, and a screen of the electronic device is turned off. After the electronic device is woken up, the switching an electronic device to a working state may be turning on the screen, may be activating voice interaction, or may be activating a phone interaction interface, a short message service message interaction interface, another interaction interface, or a plurality of the foregoing interfaces. In some embodiments of this application, when standby wakeup includes turning on the screen, the entire screen of the electronic device may be turned on. In some other embodiments of this application, when standby wakeup includes turning on the screen, a part of the screen of the electronic device may be turned on, for example, only a part of a screen used to display always on display information corresponding to AOD is turned on, to reduce power consumption of the electronic device after the electronic device is woken up. This standby wakeup solution features lower power consumption, is more helpful in prolonging a standby time of the electronic device, and is currently widely applied to various electronic devices.

In a conventional standby wakeup manner, a user needs to press a power button, a volume button, or a side button. However, this manner is not applicable to a user who is inconvenient to press a button due to a finger injury or another case. In this case, a new standby wakeup manner, namely, artificial intelligence (AI) wakeup, emerges. In AI wakeup, a feature of the user is learned by using human awareness and thinking. Even if the user does not touch the electronic device, the electronic device can be woken up by using the learned feature in AI wakeup. Common AI wakeup manners include an air action gesture-based wakeup and gaze-based wakeup. When the electronic device supports air action gesture-based wakeup, the user may wake up the electronic device by drawing a preset shape in the air. When the electronic device supports gaze-based wakeup, the user may wake up the electronic device by gazing the screen. In the two wakeup manners, the electronic device may be directly woken up by using an air action gesture or through gazing, and the user does not need to press a button, to facilitate interaction between the user and the electronic device.

The solutions in this application are applicable to standby wakeup of the electronic device. A standby wakeup manner is not limited to air action gesture-based wakeup and gaze-based wakeup, and may be another manner of waking up the electronic device by recognizing an image, for example, facial recognition, air action-based fingerprint recognition, and palmprint recognition. In all the foregoing manners, a feature in an image is extracted based on image recognition, and then the electronic device is woken up by using the feature.

The image processing apparatus provided in this application is configured to wake up the image processing apparatus (for example, an electronic device) in a standby state with relatively low power consumption. The image processing apparatus may be the electronic device 100 in FIG. 1 or some components in the electronic device 100, for example, a mainboard or a functional component in the electronic device 100, or may be the processor 110 in the electronic device 100. This is not limited in embodiments of this application.

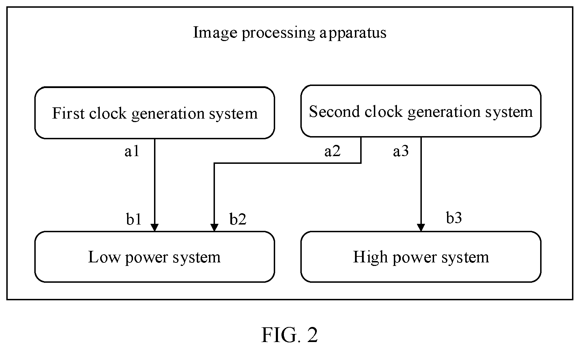

FIG. 2 is an example of a schematic diagram of a structure of an image processing apparatus according to an embodiment of this application. As shown in FIG. 2, the image processing apparatus may include a first clock generation system, a second clock generation system, a low power system, and a high power system. A clock output terminal ($a_1$) of

the first clock generation system is connected to a first clock input terminal ($b_1$) of the low power system, a first clock output terminal ($a_2$) of the second clock generation system is connected to a second clock input terminal ($b_2$) of the low power system, and a second clock output terminal ($a_3$) of the second clock generation system is connected to a clock input terminal ($b_3$) of the high power system. In this implementation, the first clock generation system may generate a first clock signal at a first frequency, where the first clock signal is used by the low power system to perform processing when the image processing apparatus is in a standby state, for example, perform standby wakeup, and the second clock generation system may generate a second clock signal at a second frequency, where the second clock signal is used by the high power system to maintain normal working when the image processing apparatus is in a normal working state, and the first frequency is less than the second frequency.

When the image processing apparatus is in the standby state, the image processing apparatus may enable the terminal $a_1$ of the first clock generation system, and disable the terminal $a_2$ and the terminal $a_3$ of the second clock generation system. In this way, the low-frequency first clock signal may be transmitted to the low power system by using the enabled terminals $a_1$ and $b_1$, so that the low power system processes image information (for example, image information captured by a front-facing camera) based on the low-frequency first clock signal. When a face or a gesture is detected in the image information, the low power system may trigger the image processing apparatus to switch to the normal working state. In this implementation, a frequency of a clock signal used by the low power system when the image processing apparatus is in the standby state is less than a frequency of a clock signal provided when the image processing apparatus is in the normal working state. The low-frequency clock signal helps enable the low power system to be in a low power mode, to reduce power consumption of performing standby wakeup when the image processing apparatus is in the standby state.

When the image processing apparatus is in the normal working state, the image processing apparatus may enable the terminal $a_3$ of the second clock generation system. In this way, the high-frequency second clock signal may be transmitted to the high power system by using the enabled terminals $a_3$ and $b_3$, so that the high power system maintains normal working of the image processing apparatus based on the high-frequency second clock signal. In addition, when the image processing apparatus is in the normal working state, the low power system may be in a working state, and a clock signal used in the working state may be determined based on a current service, for example, may be a high-frequency first clock signal or a low-frequency second clock signal. When the first clock signal is used, the image processing apparatus may enable the terminal $a_1$ of the first clock generation system, and disable the terminal $a_2$ of the second clock generation system, so that the low-frequency first clock signal is transmitted to the low power system by using the enabled terminals $a_1$ and $b_1$. When the second clock signal is used, the image processing apparatus may disable the terminal $a_1$ of the first clock generation system, and enable the terminal $a_2$ of the second clock generation system, so that the high-frequency second clock signal is transmitted to the low power system by using the enabled terminals $a_2$ and $b_2$. In this implementation, a frequency of the clock signal used when the low power system is in the normal working state matches the current service of the low power system, and is not always the high-frequency second clock signal. This makes a power consumption control solution more flexible, and helps further reduce power consumption of the image processing apparatus in the normal working state. The clock signal used by the low power system when the image processing apparatus is in the normal working state is described in detail in the following embodiments, and is not described herein.

It should be noted that, that the image processing apparatus controls output of a clock signal by enabling or disabling the clock output terminal of the clock generation system in the foregoing content is merely an optional implementation. In another optional implementation, a switch may be disposed on a clock transmission link between each clock generation system and the low power system or the high power system, and the image processing apparatus controls output of a clock signal by closing or opening the switch disposed on the clock transmission link. For example, it is assumed that a switch is disposed on a clock transmission link between the terminal $a_1$ of the first clock generation system and the terminal $b_1$ of the low power system. In this case, when the image processing apparatus closes the switch, the first clock signal may be transmitted to the low power system by using the enabled terminals $a_1$ and $b_1$; and when the image processing apparatus opens the switch, the first clock signal is not transmitted to the low power system.

In this embodiment of this application, when the second clock signal corresponds to a clock signal that is at 38.4 MHz and that is used when the image processing apparatus normally works, the first clock signal may be any clock signal whose frequency is less than 38.4 MHz, for example, a clock signal at 32 KHz. In this way, in this implementation, when the image processing apparatus is in the standby state, a clock signal at a relatively low frequency (for example, 32 KHz, which is less than 38.4 MHz used in the normal working state) is first used to perform image processing, and only when it is determined that the image processing apparatus needs to be woken up, switching to a clock signal at a relatively high frequency (for example, 38.4 MHz) is performed to support normal working after wakeup. Therefore, it may be learned that in this manner, the image processing apparatus can be normally woken up, and standby wakeup does not need to be periodically performed by using a high-frequency clock signal, to help reduce power consumption of an electronic device. Therefore, it may be learned that in this embodiment of this application, clock signals used by the low power system in different states (namely, the standby state and the normal working state) are properly designed, to help reduce power consumption of the low power system and even power consumption of the entire image processing apparatus.

**EP 4 198 688 B1**

In an optional implementation, the low power system may include a plurality of first functional components, and the plurality of first functional components are located in a standby non-power-off area, which is also referred to as an always on area. In this way, even if the image processing apparatus is in the standby state, the plurality of first functional components in the low power system may still work, to help implement a standby wakeup function of the image processing apparatus in the standby state. Correspondingly, the high power system may include a plurality of second functional components, and the plurality of second functional components are located in a standby power-off area, which is also referred to as a non-always on area. In this way, when the image processing apparatus is in the standby state, the plurality of second functional components in the high power system do not work either, that is, are in a low power state, to help reduce power consumption of the image processing apparatus in the standby state. Specifically, that the plurality of second functional components are in a low power state may specifically mean that the plurality of second functional components have no clock input or have only a very low clock input, or the plurality of second functional components have no supply voltage input (that is, the plurality of second functional components are completely powered down) or have only a very low supply voltage input. Therefore, the low power state of the plurality of second functional components may include a state such as a completely powered-down state, a partially powered-down state, a sleep state, a hibernation state, or a standby state.

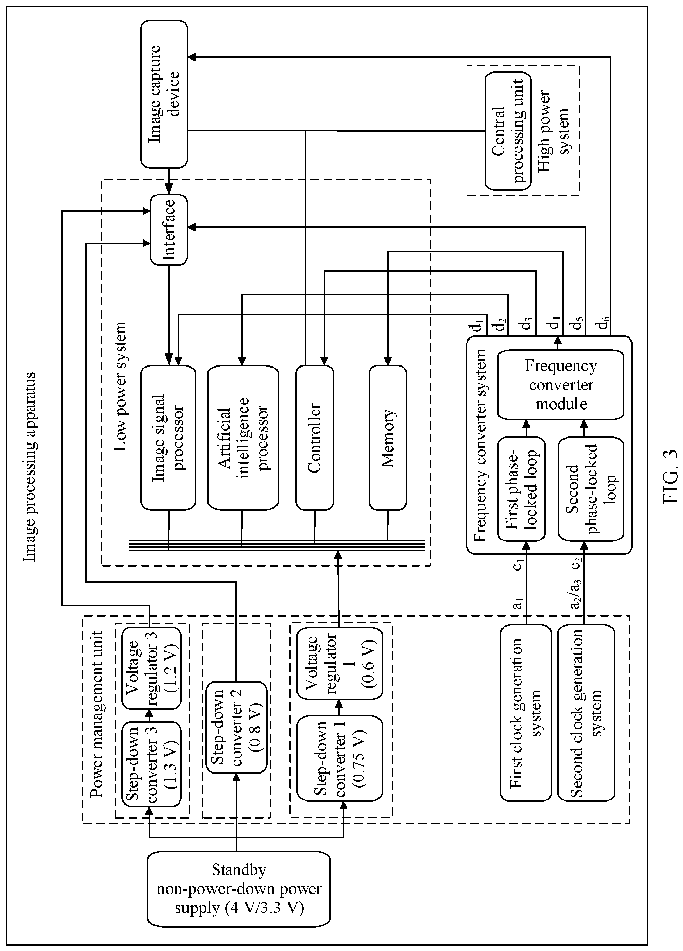

FIG. 3 is an example of a schematic diagram of an overall structure of an image processing apparatus according to an embodiment of this application. As shown in FIG. 3, the plurality of first functional components may include an image signal processor, an artificial intelligence processor, a controller, a memory, and an interface, and the plurality of second functional components may include a central processing unit. The image signal processor, the artificial intelligence processor, the controller, and the memory may be connected by using a bus. The image signal processor may be further connected to an image capture device through the interface. The image capture device may be a camera (for example, a front-facing camera) described above. The controller may be further connected to the image capture device and the central processing unit.

It should be understood that in addition to the central processing unit, the plurality of second functional components in the standby power-off area further include one or more components such as a digital signal processor (DSP), a graphics processing unit (GPU), a baseband processor, a secure element (SE), or a voice subsystem. Optionally, the plurality of second functional components may further include a second artificial intelligence processor, a second memory, and a second image signal processor. Power consumption of the second artificial intelligence processor, the second memory, and the second image signal processor is greater than power consumption of devices, namely, the artificial intelligence processor, the memory, and the image signal processor in the standby non-power-off area, that are configured to implement similar operations in the standby non-power-off area. For example, power consumption of the second artificial intelligence processor is greater than that of the artificial intelligence processor in the standby non-power-off area, to perform processing with high power consumption and high performance.

When the image processing apparatus is in the standby state, the plurality of first functional components and the plurality of second functional components may periodically perform the following steps to implement a standby wakeup function: In a working process, the controller sends an image capture instruction to the image capture device at a start moment of a current period. The image capture device collects the image information based on the image capture instruction, and sends the image information to the image processor through the interface. The image processor processes the image information to obtain processed image information, transmits the processed image information to the memory for storage by using the bus, and sends a notification message to the controller after transmission is completed. After receiving the notification message, the controller sends a standby recognition instruction to the artificial intelligence processor. The artificial intelligence processor invokes, based on the standby recognition instruction, an instruction of an AI image recognition algorithm stored in the memory, extracts a feature of the processed image information based on the AI image recognition algorithm, matches the extracted feature with a target feature to obtain a matching result, and sends the matching result to the controller by using the bus. The matching result includes that the extracted feature matches or does not match the target feature. After the controller obtains the matching result, if the matching result is that the extracted feature matches the target feature, it indicates that the image information includes a feature such as a face or a gesture, and therefore the controller may send a trigger signal to the central processing unit; or if the matching result is that the extracted feature does not match the target feature, it indicates that the image information does not include a feature such as a face or a gesture, and therefore the controller may repeatedly perform the foregoing operation after a start moment of a next period arrives. After receiving the trigger signal, the central processing unit switches the image processing apparatus to the normal working state in response to the trigger signal.

For example, in this embodiment of this application, that the central processing unit switches the image processing apparatus to the normal working state may include: controlling a screen of the image processing apparatus to be turned on. In this manner, a user is supported in directly turning on the screen in a screen-off state, so that an operation is directly performed on an application on the screen, to improve user experience. In this embodiment of this application, the central processing unit may be a core of the image processing apparatus, and is configured to run at least an operating system program or an application software program. In this way, when the user triggers the application on the screen, the central processing unit may run a corresponding application software program based on the trigger operation performed by the user.

In this embodiment of this application, the plurality of first functional components may be corresponding processing units in the electronic device shown in the content description part in FIG. 1. For example, the image signal processor in FIG. 3 corresponds to the ISP shown in the content description part in FIG. 1, the artificial intelligence processor in FIG. 3 corresponds to the NPU shown in the content description part in FIG. 1, the controller in FIG. 3 corresponds to the controller shown in the content description part in FIG. 1, and includes a sensor hub, and the memory in FIG. 3 corresponds to the internal memory shown in the content description part in FIG. 1.

In an optional implementation, the plurality of first functional components may be tailored components. The tailored component is obtained by tailoring some required functions based on a complete component. Compared with the complete component, the tailored component has a lower processing capability and lower power consumption. In this case, to ensure that an original function of the image processing apparatus is not affected, the plurality of second functional components may further include the corresponding processing unit shown in FIG. 1. That is, as described above, the plurality of second functional components include the second artificial intelligence processor, the second memory, and the second image signal processor. These processing units serve as complete functional components and perform a high processing capability when the image processing apparatus is in the normal working state, to maintain normal working of the electronic device. For ease of understanding, information related to each tailored first functional component in the standby power-off area is described below by using an example.

The image processor in the standby power-off area may be a mini image processor (MINI ISP). The mini ISP may support input image information in a Bayer RAW8 format, an RGB format, or a Y format, and may support output image information in an RGB format or a Y format. When processing the image information, the mini ISP may support maximum resolution of 1280×960, a minimum cropping window of 32×32, and a downsampling function of any multiple from 1x to 8x, and may further support one or more of a nonlinear after effects (AE) function, an automatic white balance (AWB) function, a local area network screen capture (LSC) function, and a gamma correction function. Compared with a complete ISP, power consumption of the tailored mini ISP can be reduced from 100 MW to 1 MW in one period of standby wakeup.

The artificial intelligence processor in the standby power-off area may be a lightweight artificial intelligence processor (Tiny NPU). The tiny NPU may support a data type only in an INT8 format, and support an INT8 or 2-bit weight storage format. An image processing capability of the tiny NPU in the standby mode is approximately 200 GOPS, and energy efficiency reaches 6 TOPS/W.

The controller in the standby power-off area may refer to a universal smart sensor hub. When the sensor hub uses an ARM Cortex-M7 low power processor, power consumption of the sensor hub in one period of standby wakeup is approximately 4 MW.

The memory in the standby power-off area may be a local memory (Local Ram). When the image processing apparatus includes a chip, the local RAM may be independently deployed on a chip, or may be deployed on a same chip as another described functional component. Storage space of the local RAM may be controlled to be slightly greater than minimum space required for implementing the standby wakeup function, for example, may be only slightly greater than total space required for the processed image information and the AI image processing algorithm.

The interface may be a CSI MIPI interface. The CSI MIPI interface is configured to connect the image capture device and the image signal processor, and can transmit the image information collected by the image capture device to the image signal processor.

In this embodiment of this application, the plurality of first functional components and the plurality of second functional components may be deployed on a same chip (for example, a system-on-a-chip (SoC)), or may be deployed on a plurality of chips in a dispersed manner. To reduce space occupied by the image processing apparatus, in this embodiment of this application, the plurality of first functional components and the plurality of second functional components may be deployed in a same chip. In addition, a standby power-off area and a standby non-power-off area may be further disposed on the chip. A component in the standby power-off area may be powered by a standby power-down power supply (that is, the power supply is in a power-off state in a standby state), and the plurality of second functional components are deployed in the standby power-off area, to turn off, in the standby state, each second functional component unrelated to the standby wakeup function, so as to reduce power consumption. A component in the standby non-power-off area may be powered by a standby non-power-down power supply (that is, the power supply is in a power supply state in a standby state), and the plurality of first functional components are deployed in the standby non-power-off area, to implement the standby wakeup function in the standby state. There is a relatively weak correlation between the plurality of second functional components and the standby wakeup function. Therefore, the plurality of second functional components are not described in detail in this application. An implementation process of supplying power to the plurality of first functional components is described below.

In this embodiment of this application, a power supply voltage required by each first functional component may be less than a voltage output by the standby non-power-down power supply, and the first functional components need different power supply voltages. In an optional implementation, still refer to FIG. 3. The image processing apparatus may further include a power management unit (PMU). The power management unit includes a plurality of voltage converters (as shown in each dashed-line box in the power management unit in FIG. 3), and each of the plurality of voltage converters may correspond to one or more first functional components. Each voltage converter may include a step-down converter and/or a voltage regulator. When only the step-down converter or the voltage regulator is included, the step-down converter or the voltage regulator may perform voltage step-down on a 4 V or 3.3 V voltage output by the standby non-power-down power supply, and provide a voltage obtained through voltage step-down to the corresponding first functional component. When both the step-down converter and the voltage regulator are included, the step-down converter may perform level-1 voltage step-down on a 4 V or 3.3 V voltage output by the standby non-power-down power supply, and provide a voltage obtained through level-1 voltage step-down to the voltage regulator. The voltage regulator may perform level-2 voltage step-down on the voltage output by the step-down converter, and provide a voltage obtained through level-2 voltage step-down processing to the corresponding first functional component. The step-down converter may be a buck circuit or a switched-capacitor (SC) circuit, and the voltage regulator may be a low dropout regulator (LDO). For example, in FIG. 3, the power management unit may include the following voltage converters.

Voltage converter that includes a step-down converter 1 and a voltage regulator 1: The 4 V/3.3 V voltage output by the standby non-power-down power supply is first reduced to 0.75 V by using the step-down converter 1, then reduced to 0.6 V by using the voltage regulator, and finally provided to the bus, to supply, by using the bus, power to the image signal processor, the artificial intelligence processor, the controller, and the memory connected to the bus.

Voltage converter that includes a step-down converter 2 and a voltage converter that includes a step-down converter 3 and a voltage regulator 3: The 4 V/3.3 V voltage output by the standby non-power-down power supply is reduced to 0.8 V by using the step-down converter 2, and is provided to a first power supply terminal of the interface, and is further reduced to 1.3 V by using the step-down converter 3, then is reduced to 1.2 V by using the voltage regulator 3, and then is provided to a second power supply terminal of the interface, to supply power to the interface by using a voltage difference between the first power supply terminal and the second power supply terminal of the interface.

In an example, the image capture device needs to collect the image information in the standby state, and therefore the image capture device may also be powered by the standby non-power-down power supply. In this case, the power management unit may further include a voltage converter (not shown in FIG. 3) corresponding to the image capture device. The voltage converter is configured to reduce the 4 V/3.3 V voltage output by the standby non-power-down power supply to 1.1 V/1.8 V/2.85 V, and then provide the voltage obtained through voltage step-down to the image capture device. For a structure of the voltage converter corresponding to the image capture device, refer to the structure of the voltage converter corresponding to the first functional component. Details are not described herein.

In the implementation, the low power system includes the image signal processor, the artificial intelligence processor, the controller, the memory, and the interface, and the controller uniformly manages operations performed by all other components in the standby state. By uniformly managing wakeup operations of the image processing apparatus in the standby state, controllability of standby wakeup is maintained. However, this is merely an optional implementation. In another optional implementation, the low power system may include only some of the image signal processor, the artificial intelligence processor, the controller, the memory, and the interface, and an implementation process of standby wakeup may not be uniformly managed by the controller. For example, in a case, the low power system may include only the image signal processor, the artificial intelligence processor, and the controller. In this case, the image signal processor may obtain the image information (for example, image information downloaded from a network, or image information sent by another device), and directly send processed image information to the artificial intelligence processor, and the artificial intelligence processor may invoke an AI image recognition algorithm stored in an external storage device (for example, a cloud server) to recognize whether there is a face or a gesture in the processed image information, and when there is a face or a gesture, send a notification message to the controller, so that the controller wakes up the image processing apparatus. For another example, in another case, the low power system may include only the image signal processor, the artificial intelligence processor, the controller, and the memory. In this case, the image signal processor may obtain the image information, and send processed image information to the memory, and the artificial intelligence processor may invoke an AI image recognition algorithm stored in the memory to recognize whether there is a face or a gesture in the processed image information, and when there is a face or a gesture, send a notification message to the controller, so that the controller wakes up the image processing apparatus. For another example, in still another case, the low power system may include only the image signal processor, the artificial intelligence processor, the controller, and the interface. In this case, the image signal processor may obtain, through the interface, the image information collected by the image capture device, and directly send processed image information to the artificial intelligence processor, and the artificial intelligence processor may invoke an AI image recognition algorithm stored in an external storage device to recognize whether there is a face or a gesture in the processed image information, and when there is a face or a gesture, send a notification message to the controller, so that the controller wakes up the image processing apparatus.

In the following embodiments of this application, description is provided based on an example in which the controller uniformly manages operations performed by all other components in the standby state. In an optional implementation, still refer to FIG. 3. The image processing apparatus may further include a frequency converter system.

A first clock input terminal ($c_1$) of the frequency converter system is connected to the clock output terminal $a_1$ of the first clock generation system, and a second clock input terminal ($c_2$) of the frequency converter system is connected to the clock output terminal $a_2/a_3$ of the second clock generation system. The frequency converter system further has a plurality of clock output terminals (for example, $d_1$, $d_2$, $d_3$, $d_4$, $d_5$, and $d_6$), and the plurality of clock output terminals respectively correspond to the plurality of first functional components and the image capture device. For example, the clock output terminal $d_1$ of the frequency converter system is configured to be connected to a clock input terminal of the image signal processor, the clock output terminal $d_2$ of the frequency converter system is configured to be connected to a clock input terminal of the artificial intelligence processor, the clock output terminal $d_3$ of the frequency converter system is configured to be connected to a clock input terminal of the controller, the clock output terminal $d_4$ of the frequency converter system is configured to be connected to a clock input terminal of the memory, the clock output terminal ds of the frequency converter system is configured to be connected to a clock input terminal of the interface, and the clock output terminal $d_6$ of the frequency converter system is configured to be connected to a clock input terminal of the image capture device. When the image processing apparatus is in the standby state, the frequency converter system may receive the first clock signal from the first clock generation system by using the clock output terminal $a_1$ and the clock input terminal $c_1$, then generate, based on the first clock signal, a first clock signal obtained through frequency conversion, and provide the first clock signal obtained through frequency conversion to the low power system and the image capture device. When the image processing apparatus is in the normal working state, the frequency converter system may receive the second clock signal from the second clock generation system by using the clock output terminal $a_2/a_3$ and the clock input terminal $c_2$, then generate, based on the second clock signal, a second clock signal obtained through frequency conversion, and provide the second clock signal obtained through frequency conversion to the high power system and the low power system. Alternatively, the frequency converter system provides the second clock signal obtained through frequency conversion only to the high power system, receives the first clock signal from the first clock generation system by using the clock output terminal $a_1$ and the clock input terminal $c_1$, generates, based on the first clock signal, a first clock signal obtained through frequency conversion, and provides the first clock signal obtained through frequency conversion to the low power system and the image capture device. It may be understood that although not shown in FIG. 3, the frequency converter system may further have a clock output terminal, configured to be connected to a clock input terminal of the bus. Frequency conversion performed by the frequency converter system may include frequency division or frequency multiplication, that is, increasing or decreasing a frequency of the received first clock signal or a frequency of the received second clock signal.

In this embodiment of this application, there may be a plurality of possible structures for the frequency converter system. For example, still refer to FIG. 3. The frequency converter system may include a first phase-locked loop, a second phase-locked loop, and a frequency converter module. A clock input terminal of the first phase-locked loop is connected to the clock output terminal $c_1$ of the frequency converter system, a clock input terminal of the second phase-locked loop is connected to the clock output terminal $c_2$ of the frequency converter system, and a clock output terminal of the first phase-locked loop and a clock output terminal of the second phase-locked loop are respectively connected to clock input terminals of the frequency converter module. The frequency converter module further includes a plurality of clock output terminals, and the plurality of clock output terminals are respectively connected to the plurality of clock output terminals of the frequency converter system. In this case, the first phase-locked loop may receive, by using the clock output terminal $a_1$ and the clock input terminal $c_1$, the first clock signal output by the first clock generation system, and then perform frequency multiplication processing on the first clock signal, to obtain a first clock signal obtained through frequency multiplication, and then the frequency converter module performs a frequency division operation on the first clock signal obtained through frequency multiplication, to obtain a plurality of first clock signals obtained through frequency division. The plurality of first clock signals obtained through frequency division respectively correspond to the plurality of the first functional components and the image capture device. The second phase-locked loop may receive, by using the clock output terminal $a_2/a_3$ and the clock input terminal $c_2$, the second clock signal output by the second clock generation system, and then perform frequency multiplication processing on the second clock signal, to obtain a second clock signal obtained through frequency multiplication, and then the frequency converter module performs a frequency division operation on the second clock signal obtained through frequency multiplication, to obtain a plurality of second clock signals obtained through frequency division. The plurality of second clock signals obtained through frequency division respectively correspond to the plurality of first functional components, and/or the plurality of second clock signals obtained through frequency division respectively correspond to the plurality of second functional components and the image capture device.

In a possible implementation of this example, an output of the first clock generation system may be enabled and disabled by controlling the first phase-locked loop, and an output of the second clock generation system may be enabled and disabled by controlling the second phase-locked loop. For example, the controller may be further connected to a control terminal of the first phase-locked loop and a control terminal of the second phase-locked loop (not shown in FIG. 3). When the image processing apparatus is in the standby state, the controller may control the first phase-locked loop to be in an enabled state, and control the second phase-locked loop to be in a disabled state. In this way, although both the first clock generation system and the second clock generation system can output a clock signal to the frequency converter system, the second clock signal output by the second clock generation system is truncated by the second phase-locked loop, and only the first clock signal output by the first clock generation system is provided to the low power system and the image capture device by using the first phase-locked loop. When the image processing apparatus is in the normal working state, and the low power system needs the second clock signal to work, the controller may control the first phase-locked loop to be in a disabled state, and control the second phase-locked loop to be in an enabled state. In this way, although both the first clock generation system and the second clock generation system can output a clock signal to the frequency converter system, the first clock signal output by the first clock generation system is truncated by the first phase-locked loop, and only the second clock signal output by the second clock generation system is provided to the high power system, the low power system, and the image capture device by using the second phase-locked loop. When the image processing apparatus is in the normal working state, and the low power system needs the first clock signal to work, the controller may control both the first phase-locked loop and the second phase-locked loop to be in an enabled state. In this way, the first clock signal output by the first clock generation system is provided to the low power system and the image capture device by using the first phase-locked loop, and the second clock signal output by the second clock generation system is provided to the high power system by using the second phase-locked loop.

In this embodiment of this application, when the image processing apparatus is in the standby state, a multiple for performing frequency multiplication on the first clock signal by the first phase-locked loop may be set by a person skilled in the art based on experience. A smaller multiple for performing frequency multiplication indicates a smaller frequency of the first clock signal that is obtained through frequency multiplication and that is provided to each first functional component and the image capture device, which is more helpful in reducing power consumption. However, if there is an excessively small multiple, a case in which each first functional component and the image capture device cannot be started due to an excessively low frequency is prone to occur. Therefore, for example, the multiple for performing frequency multiplication by the first phase-locked loop may be set based on a minimum frequency of a clock signal required for starting each first functional component and the image capture device, to reduce power consumption as much as possible when each first functional component and the image capture device are successfully started. For example, when the frequency of the first clock signal is 32 KHz, the multiple for performing frequency multiplication by the first phase-locked loop may be set to a value between 3750 and 9375. In this case, if the multiple for performing frequency multiplication by the first phase-locked loop is set to 5750, the first phase-locked loop may multiply the first clock signal at 32 KHz to 184 MHz, and then the frequency converter module performs frequency division on the first clock signal of 184 MHz, and provides first clock signals obtained through frequency division to the first functional components and the image capture device. Correspondingly, when the image processing apparatus is in the normal working state, a multiple for performing frequency multiplication on the second clock signal by the second phase-locked loop may be set based on a frequency of a clock signal required by each processing unit to work normally. For example, when the frequency of the second clock signal is 38.4 MHz, the multiple for performing frequency multiplication by the second phase-locked loop may be set to a value between 20 and 83333. In this case, if the multiple for performing frequency multiplication by the second phase-locked loop is set to 25, the second phase-locked loop may multiply the first clock signal at 38.4 MHz to at least 960 MHz, and then the frequency converter module performs frequency division on the second clock signal of 960 MHz, and provides second clock signals obtained through frequency division to the second functional components. A multiple for performing frequency multiplication by the first phase-locked loop when the image processing apparatus is in the normal working state may be the same as that in the standby state, or may be determined based on a current working mode of the low power system. Higher power consumption required in the current working mode indicates a larger multiple for performing frequency multiplication by the first phase-locked loop. Lower power consumption required in the current working mode indicates a smaller multiple for performing frequency multiplication by the first phase-locked loop.

Table 1 is an example of a table of a comparison relationship between the first phase-locked loop and the second phase-locked loop.

Table 1

| Phase-locked loop | Input clock signal | Clock precision | Output clock signal | Power consumption |
|---|---|---|---|---|
| First phase-locked loop | 32 KHz | ≤3% | 120 MHz to 300 MHz | Approximately 0.1 MW |
| Second phase-locked loop | 38.4 MHz | ≤1% | 800 MHz to 3.2 GHz | 2 MW to 6 MW |

Refer to Table 1. It may be learned that when the frequency of the first clock signal received by the first phase-locked loop is 32 KHz, and the frequency of the second clock signal received by the second phase-locked loop is 38.4 MHz, although the clock precision of the first phase-locked loop is not as high as the clock precision of the second phase-locked loop, and a frequency range of the clock signal that can be output by the first phase-locked loop is not as large as a frequency range of the clock signal that can be output by the second phase-locked loop, a frequency of the clock signal output by the first phase-locked loop is obviously much less than a frequency of the clock signal output by the second phase-locked loop, the power consumption of the first phase-locked loop in the case of the low-frequency clock signal is only approximately 0.1 MW, and the power consumption of the second phase-locked loop in the case of the high-frequency clock signal is at least 2 MW. The power consumption of the first phase-locked loop can be at least 20 times less than the power consumption of the second phase-locked loop.

Based on the data shown in Table 1, based on the solution in this application, after a start moment of each period in the standby state, the image processing apparatus provides a clock signal to each tailored first functional component by using 32 KHz and the first phase-locked loop, to implement a standby wakeup function of each tailored first functional component. In this case, each tailored first functional component works based on a clock signal at a frequency ranging from 120 MHz to 300 MHz, so that each tailored first functional component has relatively low power consumption, and the power consumption of the first phase-locked loop is only approximately 0.1 MW. Obviously, in comparison with a solution in which each processing unit is periodically started to implement standby wakeup in the conventional technology, in the solution in this application, total power consumption of the image processing apparatus in the standby state can be effectively reduced.

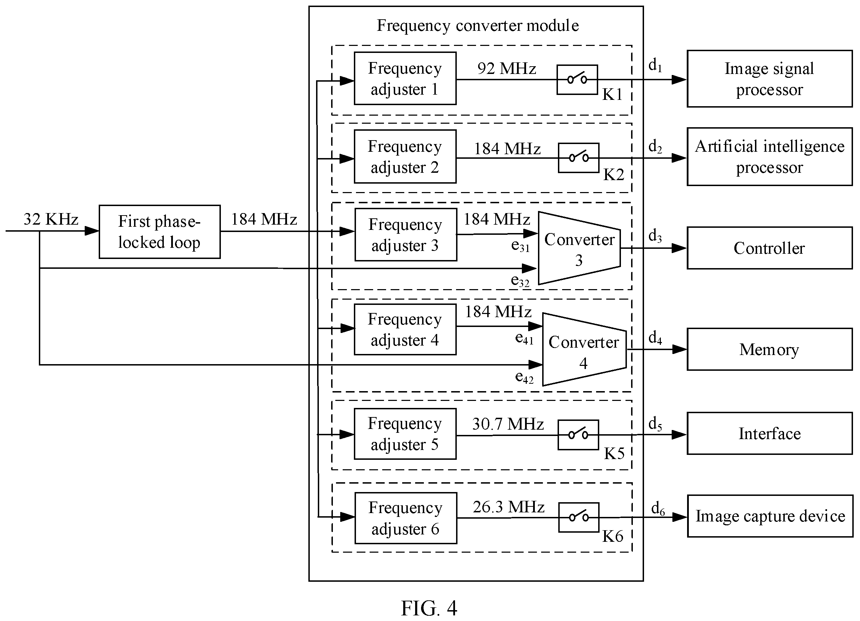

FIG. 4 is an example of a schematic diagram of a structure of a frequency converter module according to an embodiment of this application. As shown in FIG. 4, the frequency converter module may include a plurality of frequency converters (each dashed-line box in FIG. 4 corresponds to one frequency converter), and each of the plurality of frequency converters corresponds to one of the plurality of first functional components or the image capture device. The clock output terminal of the first phase-locked loop may be connected to a clock input terminal of each freauencv converter and a clock output terminal of each frequency converter may be connected to a clock input terminal of the corresponding first functional component or the image capture device. In this case, when the first phase-locked loop is enabled, each frequency converter may receive the first clock signal that is obtained through frequency multiplication and that is output by the first phase-locked loop, perform frequency conversion adjustment on the first clock signal obtained through frequency multiplication, and then output a first clock signal obtained through frequency conversion adjustment to the corresponding first functional component or the image capture device. In addition, although not shown in FIG. 4, the clock output terminal of the second phase-locked loop may also be connected to the clock input terminal of each frequency converter. When the second phase-locked loop is enabled, each frequency converter may receive the second clock signal that is obtained through frequency multiplication and that is output by the second phase-locked loop, perform frequency conversion adjustment on the second clock signal obtained through frequency multiplication, and then output a second clock signal obtained through frequency conversion adjustment to the corresponding first functional component or the image capture device.

In this embodiment of this application, each frequency converter may include a frequency adjuster, and the frequency adjuster is configured to perform, based on a preset frequency conversion multiple, frequency conversion adjustment on a received clock signal obtained through frequency multiplication. For example, the frequency converter module receives the first clock signal that is obtained through frequency multiplication and that is output by the first phase-locked loop. The first clock signal is first multiplied by the first phase-locked loop to obtain a relatively high frequency, and then is converted by the frequency adjuster. Therefore, a frequency of the first clock signal obtained through frequency conversion is still greater than the frequency of the original first clock signal. For example, still refer to FIG. 4. When the first phase-locked loop multiplies the first clock signal at 32 KHz to 184 MHz, the image signal processor corresponds to a frequency adjuster 1, and a frequency conversion multiple of the frequency adjuster 1 is 2. In this way, the frequency adjuster 1 may convert the first clock signal at 184 MHz into 92 MHz, and provide the signal to the image signal processor. The artificial intelligence processor corresponds to a frequency adjuster 2, the controller corresponds to a frequency adjuster 3, and the memory corresponds to a frequency adjuster 4, and a frequency conversion multiple of each of the frequency adjuster 2, the frequency adjuster 3, and the frequency adjuster 4 is 1. In this way, the frequency adjuster 2, the frequency adjuster 3, and the frequency adjuster 4 may respectively provide the first clock signal at 184 MHz to the artificial intelligence processor, the controller, and the memory. The interface corresponds to a frequency adjuster 5, and a frequency conversion multiple of the frequency adjuster 5 is 6. In this way, the frequency adjuster 5 may convert the first clock signal at 184 MHz into 30.7 MHz, and provide the signal to the interface. The image capture device corresponds to a frequency adjuster 6, and a frequency conversion multiple of the frequency adjuster 6 is 7. In this way, the frequency adjuster 6 may convert the first clock signal at 184 MHz into 26.3 MHz, and provide the signal to the image capture device. Obviously, a frequency of a clock signal output by the clock output terminal of each frequency converter is greater than a frequency of an original clock signal existing before frequency multiplication. In an optional implementation, the frequency converter may further include the following components.

For the image signal processor, the artificial intelligence processor, the interface, and the image capture device, these elements perform corresponding work only when being invoked by the controller in the standby state, and after the work ends, these elements are always in a non-working state provided that these elements are not invoked by the controller. Therefore, these elements are auxiliary control components. After the auxiliary control component ends working, even if the frequency converter outputs a clock signal to the auxiliary control component, the auxiliary control component does not use the clock signal to work. Consequently, a loss is generated on a transmission path of the clock signal to the auxiliary control component. Based on this, still refer to FIG. 4. When the frequency converter corresponds to one of auxiliary control components such as the image signal processor, the artificial intelligence processor, the interface, and the image capture device, the frequency converter may further include a switch. A first terminal of the switch is connected to the clock output terminal of the frequency adjuster in the frequency converter, a second terminal of the switch is connected to a clock input terminal of the corresponding auxiliary control component, and the controller may be further connected to a control terminal of the switch in the frequency converter. When the controller determines that the auxiliary control component corresponding to the frequency converter works, the controller may close the switch in the frequency converter, to enable an output of the frequency converter, so that the auxiliary control component corresponding to the frequency converter works based on a clock signal output by the frequency converter. When the controller determines that the auxiliary control component corresponding to the frequency converter stops working, the controller may open the switch in the frequency converter, to disable the output of the frequency converter, so as to reduce power consumption of the auxiliary control component.

For the controller and the memory (or the bus), these elements actively perform operations such as sending a control instruction, invoking an auxiliary control element, transmitting data, and storing data in the standby state. Therefore, these elements are main control components, and a clock signal needs to be always provided to the main control component in the standby state. In this case, to reduce power consumption of the main control component, although supply of the clock signal to the main control component cannot be ended, a clock signal at a relatively low frequency may be provided to the main control component when the main control component does not need to perform a main control operation, to maintain survival of the main control component. Based on this, still refer to FIG. 4. When the frequency converter corresponds to a main control component such as the controller or the memory (or the bus), the frequency converter may further include a converter. A first clock input terminal of the converter is connected to the clock output terminal of the frequency adjuster in the frequency converter, a second clock input terminal of the converter is connected to the clock output terminal of the first clock generation system, a clock output terminal of the converter is connected to a clock input terminal of a corresponding element, and the controller may be further connected to a control terminal of the converter in the frequency converter. When the controller determines that the main control component corresponding to the frequency converter performs a main control operation, the controller may enable the first clock input terminal and the clock output terminal of the converter in the frequency converter, to provide a first clock signal obtained through frequency conversion to the corresponding main control component, so that the main control component corresponding to the frequency converter performs the main control operation based on the first clock signal obtained through frequency conversion. When the controller determines that the main control component corresponding to the frequency converter ends the main control operation, the controller may enable the second clock input terminal and the clock output terminal of the converter in the frequency converter, to provide the first clock signal to the corresponding main control component, so that the main control component corresponding to the frequency converter maintains a survival state based on the first clock signal. The frequency of the clock signal output by the clock output terminal of each frequency converter is greater than the frequency of the first clock signal existing before frequency multiplication. Therefore, in this implementation, when a main control operation does not need to be performed, the main control component maintains survival based on a first clock signal at a relatively low frequency (for example, 32 KHz), and only when a main control operation needs to be performed, the main control component performs a main control operation based on a first clock signal that is at a relatively high frequency (for example, 184 MHz) and that is obtained through frequency conversion. Therefore, this manner further helps reduce the power consumption of the main control component.

It should be noted that the controlling, by opening the switch in the frequency converter corresponding to the auxiliary control component, the frequency converter not to output a clock signal in the foregoing content is merely an optional implementation. In another optional implementation, the controller may control, in another manner, the frequency converter corresponding to the auxiliary control component not to output a clock signal. For example, the controller may disable the clock output terminal of the frequency converter corresponding to the auxiliary control component, or disable a clock output terminal that is of the frequency converter module and that is configured to be connected to a clock input terminal of the auxiliary control component. For example, still refer to FIG. 4. When the image signal processor stops working, the controller may disable the clock output terminal $d_1$. In this way, the first clock signal that is at 92 KHz and that is output by the frequency adjuster 1 may be blocked in the frequency converter module by the disabled clock output terminal $d_1$, and is not output to the image signal processor. There are many possible implementations. Details are not described herein.

With reference to the structure shown in FIG. 4, an example of a standby wakeup process in one period in the standby state is described below. In this example, it is assumed that duration of one period is 100 ms, and the controller performs standby recognition on only one image in one period. It is assumed that default modes of the plurality of frequency converters in the standby state are as follows: A switch K1, a switch K2, a switch K5, and a switch K6 are open, a second clock input terminal ($e_{32}$) of a converter 3 is connected to a clock output terminal of a converter 3, and a second clock input terminal ($e_{42}$) of a converter 4 is connected to a clock output terminal of the converter 4. That is, a frequency converter corresponding to the main control component works by using a low-frequency clock signal, and a frequency converter

16

corresponding to the auxiliary control component does not output a clock signal. It is assumed that a clock signal provided by the frequency adjuster 6 to the image capture device is MCLK.

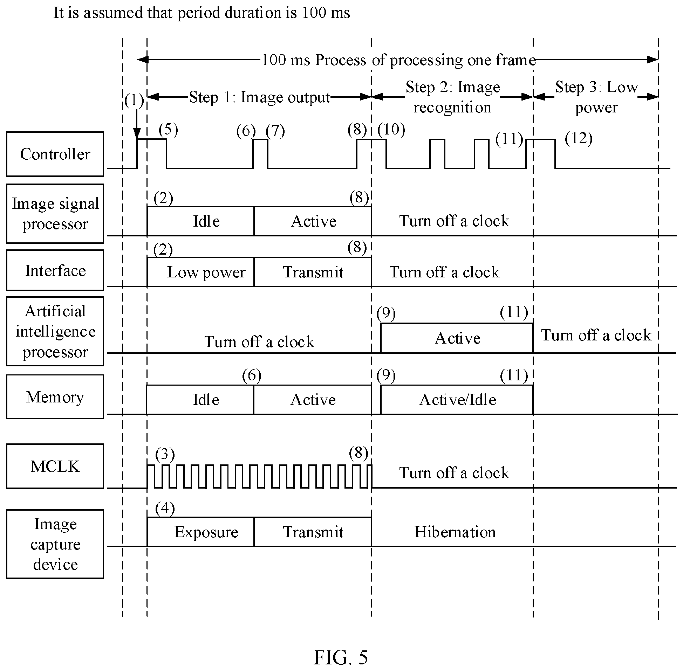

FIG. 5 is an example of a timing control diagram corresponding to a standby wakeup process of an image processing apparatus in one period in a standby state. As shown in FIG. 5, a control process of the controller in this period includes: Step 1: After a 100 ms timer expires, the controller first controls a first clock input terminal ($e_{31}$) of the converter 3 to be connected to the clock output terminal of the converter 3, so that the controller switches from a low-frequency clock signal at 32 KHz to a high-frequency clock signal at 184 MHz to work.

Step 2: The controller closes the switch K1 and the switch K5, to provide, to the image signal processor, the first clock signal that is at 92 MHz and that is output by the frequency adjuster 1, and provide, to the interface, the first clock signal that is at 30.7 MHz and that is output by the frequency adjuster 5, so that the image signal processor and the interface start to work.

Step 3: The controller closes the switch K6, to provide, to the image capture device, the first clock signal that is at 26.3 MHz (that is, MCLK works at a frequency of 26.3 MHz) and that is output by the frequency adjuster 6, and configures the image capture device to switch from a standby mode to a streaming mode.

In this embodiment of this application, that the controller configures a working mode of the image capture device is actually that the controller sends a mode switching instruction to the image capture device, and the image capture device independently switches the working mode of the image capture device based on the received mode switching instruction. In this case, if there is no clock signal on the image capture device, the image capture device actually cannot perform a working mode switching operation. Based on this, in step 3, the controller first closes the switch K6 to provide the clock MCLK to the image capture device, and then configures the working mode of the image capture device, so that the image capture device can successfully switch to the streaming mode under support of the clock MCLK. Correspondingly, after the image capture device subsequently ends working, if the image capture device needs to be switched to the standby mode, the controller needs to first send a mode switching instruction to the image capture device, and after the image capture device successfully switches to the standby mode, the switch K6 is open, to stop providing the clock MCLK to the image capture device.

In step 2 and step 3, in the streaming mode, the image capture device captures an image while transmitting an image. Therefore, if the image capture device is started before the image signal processor and the interface, some image information collected by the image capture device may be lost in a delay from starting the image capture device to starting the image signal processor and the interface, and consequently standby recognition is not accurate. Therefore, if the image signal processor and the interface are started before the image capture device, image data collected by the image capture device can be transmitted to the image signal processor without being lost, to help improve accuracy of standby recognition.

Step 4: The image capture device obtains one frame of image through exposure under support of the first clock signal at 26.3 MHz, and transmits the frame of image to the image signal processor through the interface. In step 4, a data amount of the one frame of image is relatively large, and therefore the one frame of image may be transmitted for a plurality of times, and only a part of image information of the one frame of image is transmitted each time. After the image signal processor is started and before the image capture device transmits a first part of image information, the image signal processor does not receive any image information. Therefore, the image signal processor may be in an idle mode (in other words, idle). After the image capture device starts to transmit the first part of image information and before the image signal processor receives a last part of image information, the image signal processor may process received image information. Therefore, the image signal processor may be in an active mode (in other words, active). Correspondingly, after the interface is started and before the image capture device transmits the first part of image information, the interface does not perform any transmission operation. Therefore, the interface may be in a low power mode (low power, LP). After the interface starts to receive the first part of image information and before the interface transmits the last part of image information to the image signal processor, the interface continuously transmits, to the image signal processor, image information sent by the image capture device. Therefore, the interface may be in a transmit mode (in other words, transmit).

Step 5: The controller controls the second clock input terminal ($e_{32}$) of the converter 3 to be connected to the clock output terminal of the converter 3, so that the controller maintains low power working by using the low-frequency clock signal at 32 KHz, and waits for a notification from the image capture device. In step 4 and step 5, the controller no longer needs to perform another operation in a process of capturing an image by the image capture device, and therefore after the controller controls the image capture device to switch to the first clock signal at 26.3 MHz, the controller may immediately switch to a lower power state to work, to reduce power consumption.

Step 6: After receiving a notification that is sent by the image capture device and that indicates that image transmission is started, the controller controls the first clock input terminal ($e_{31}$) of the converter 3 to be connected to the clock output terminal of the converter 3, so that the controller switches from the low-frequency clock signal at 32 KHz to the high-frequency clock signal at 184 MHz, and controls, based on the high-frequency clock signal, a first clock input terminal $e_{41}$ of the converter 4 to be connected to the clock output terminal of the converter 4, so that the memory switches from the clock signal at 32 KHz to the clock signal at 184 MHz to work.

In step 4 to step 6, the process in which the image capture device transmits the image information to the image signal processor, the process in which the image signal processor processes the image information, and the process in which the image signal processor transmits processed image information to the memory are concurrently performed. Therefore, when the image capture device starts to transmit the first part of image information, a working state of the memory is switched to a high power state, and even if the image signal processor quickly processes the first part of image information and sends the first part of image information to the memory when receiving the first part of image information, a high-frequency clock signal of the memory can support timely storage of the first part of processed image information.

In step 6, the memory has a clock signal in the entire standby state, but the memory is in an idle mode before starting to receive the first part of image information sent by the image signal processor. The memory is in an active mode in a time period from receiving the first part of image information sent by the image signal processor to receiving the last part of image information.

Step 7: The controller controls the second clock input terminal ($e_{32}$) of the converter 3 to be connected to the clock output terminal of the converter 3, so that the controller maintains low power working by using the low-frequency clock signal at 32 KHz, and waits for a notification from the image signal processor.

Step 8: After receiving a notification that is sent by the image signal processor and that indicates that image receiving is completed, the controller first controls the first clock input terminal ($e_{31}$) of the converter 3 to be connected to the clock output terminal of the converter 3, so that the controller switches to the high-frequency clock signal at 184 MHz to work, and configures, under support of the high-frequency clock signal at 184 MHz, the image capture device to switch from the streaming mode to the standby mode, and then opens the switch K6 to disable the clock signal MCLK of the image capture device, opens the switch K5 to disable a clock signal of the interface, and opens the switch K1 to disable a clock signal of the image signal processor, to reduce power consumption.

In another optional implementation of step 8, after the image capture device transmits the last part of image information through the interface, the image signal processor further needs time to process and transmit the last part of image information. In this case, the image capture device and the interface first complete work, and then the image signal processor completes work. Therefore, after transmitting the last part of image information, the image capture device may further send an image transmission completion notification to the controller, so that the controller configures the image capture device from the streaming mode to the standby mode based on the notification, opens the switch K6 to disable the clock signal MCLK of the image capture device, opens the switch K5 to disable the clock signal of the interface, and waits for a notification from the image signal processor. After the image signal processor stores the last part of processed image information, the image signal processor may further send an image storage completion notification to the controller, so that the controller opens the switch K1 based on the notification, to disable the clock signal of the image signal processor. In this implementation, clock control of each component is more refined, which is more helpful in reducing power consumption. However, if there is a relatively small time difference between components for completing work, this manner may be less easily implemented than the foregoing manner in terms of control.

In this embodiment of this application, power consumption of the interface varies with a working mode of the interface. When the interface does not transmit an image signal, even if the clock signal of the interface is not disabled, the power consumption of the interface is relatively low. Based on this, in another optional implementation, after the last part of image information is successfully transmitted to the memory, the controller may not disable the clock signal of the interface. In this case, when the interface no longer transmits image data, the interface may be in the low power mode shown in FIG. 4.

In step 8, the disabling clock signals of auxiliary components such as the image capture device, the interface, and the image signal processor is merely an optional implementation. In another optional implementation, work of the image capture device, the interface, and the image signal processor in the period is completed, and these auxiliary components no longer need to work in a subsequent time period of the period, and therefore the controller may directly power down (PD) these auxiliary components. There may be a plurality of manners of powering down the auxiliary component. For example, an output terminal of a voltage converter corresponding to the auxiliary component may be directly disabled. Alternatively, a switch may be disposed between an output terminal of a voltage converter corresponding to the auxiliary component and the auxiliary component, and the controller is connected to a control terminal of the switch, and when the auxiliary component needs to be powered down, the controller may open the switch corresponding to the auxiliary component.

Step 9: The controller opens the switch K2, to provide, to the artificial intelligence processor, the clock signal that is at 184 MHz and that is output by the frequency adjuster 2, so that the artificial intelligence processor invokes the AI image recognition algorithm in the memory to extract a feature of a processed image, and matches the feature with a target feature to obtain a matching result.

In this embodiment of this application, after the memory receives the last part of processed image information sent by the image signal processor and before the processed image information is invoked by the artificial intelligence processor, the memory does not need to perform other work. In this case, in an optional implementation, to reduce power consumption, the controller may switch the memory to a low-frequency clock signal, to maintain low power working of the memory in the time period. In another optional implementation, in consideration of the fact that the time period is relatively short, and the controller may need to immediately switch the memory to a high-frequency clock signal after switching the memory to a low-frequency clock signal, the controller may not switch the clock signal of the memory. In this way, the memory is in an idle mode in the case of the high-frequency clock signal in the time period.

In step 9, when the artificial intelligence processor obtains the AI image recognition algorithm and the processed image in the memory, the memory is in an active mode, and when the artificial intelligence processor obtains the information to perform calculation, the memory is in the idle mode. Therefore, in a process in which the artificial intelligence processor performs image recognition, the memory may be in the active mode or the idle mode.

Step 10: The controller controls the second clock input terminal $e_{32}$ of the converter 3 to be connected to the clock output terminal of the converter 3, so that the controller maintains low power working by using the low-frequency clock signal at 32 KHz, and waits for a notification from the artificial intelligence processor.

Step 11: After receiving the matching result notified by the artificial intelligence processor, the controller controls the first clock input terminal $e_{31}$ of the converter 3 to be connected to the clock output terminal of the converter 3, so that the controller switches to the high-frequency clock signal at 184 MHz to work, opens the switch K2 based on the high-frequency clock signal, to disable a clock signal of the artificial intelligence processor, and controls the second clock input terminal $e_{42}$ of the converter 4 to be connected to the clock output terminal of the converter 4, so that the memory switches to the clock signal at 32 KHz to work with low power consumption.

In another optional implementation of step 11, after the artificial intelligence processor notifies the matching result, the artificial intelligence processor and the memory no longer need to work in a subsequent time period of the period. Therefore, the controller may directly power down the artificial intelligence processor and the memory, and power on the artificial intelligence processor and the memory at a start moment of a next period or when there is the normal working state, to reduce power consumption.

Step 12: The controller determines, based on the matching result, whether there is a face or a gesture exists, and if there is a face or a gesture, sends trigger information to the central processing unit to wake up the image processing apparatus, or if there is no face or gesture, the controller controls the second clock input terminal $e_{32}$ of the converter 3 to be connected to the clock output terminal of the converter 3, so that the controller maintains low power working by using the low-frequency clock signal at 32 KHz, and repeatedly performs step 1 to step 12 after a next 100 ms timer expires.

In this embodiment of this application, that the central processing unit wakes up the image control apparatus means to switch the image processing apparatus to the normal working state, for example, turn on the screen and/or wake up a voice interaction system. In the normal working state, each second functional component and the image capture device may work by using the second clock signal, and each first functional component may work by using one of the first clock signal and the second clock signal. A specific clock signal to be used may be set based on a service scenario. In an optional implementation, still refer to FIG. 3 and FIG. 4. Each frequency converter corresponding to each first functional component in the frequency converter module may be multiplexed. In this case, the first phase-locked loop and the second phase-locked loop use a same frequency converter to provide a clock signal to a same first functional component.

When a current service scenario is a scenario in a first working mode in which a face or a gesture needs to be frequently recognized (for example, the first working mode is a dynamic gesture detection mode, the user is playing a game in the dynamic gesture detection mode, and in this scenario, the image processing apparatus needs to recognize a dynamic gesture of the user at a frequency of approximately 30 fps, to match a gesture on a game interface and determine a game score of the user), each first functional component needs to use a high-frequency clock signal to support high-frequency image recognition work. Therefore, the image processing apparatus may disable a transmission path between the first phase-locked loop and the frequency converter corresponding to each first functional component, and enable a transmission path between the second phase-locked loop and the frequency converter corresponding to each first functional component, so that the high-frequency second clock signal output by the second phase-locked loop is provided to the first functional component by using the frequency converter. When a current service scenario is in a second working mode in which a face or a gesture needs to be occasionally detected (for example, the second working mode is an intelligent screen rotation mode, the user is watching a video in the intelligent screen rotation mode, and in this scenario, the image processing apparatus needs to recognize eyes of the user at a frequency of approximately 5 fps, to match a current screen direction and determine whether the screen needs to be rotated), each first functional component needs to use a low-frequency clock signal to support low-frequency image recognition. Therefore, the image processing apparatus may disable a transmission path between the second phase-locked loop and the frequency converter, and enable a transmission path between the first phase-locked loop and the frequency converter, so that the low-frequency first clock signal output by the first phase-locked loop is provided to the first functional component by using the frequency converter. It should be understood that the two working modes are merely used as examples. Actually, the first working mode and the second working mode represent only two different working processes or working states. Frequencies of clock signals used in different working processes or working states are different. A specific meaning of the working mode is not limited in this embodiment of this application.

There may be a plurality of manners of enabling or disabling the transmission path between each of the first phase-locked loop or the second phase-locked loop and each first functional component. For example, in a manner, a switch may be further disposed on the transmission path between the phase-locked loop and each frequency converter, and a control terminal of the switch is connected to the controller (or the central processing unit). When the controller (or the central processing unit) closes the switch, the transmission path between the phase-locked loop and each first functional component is enabled. When the controller (or the central processing unit) opens the switch, the transmission path between the phase-locked loop and each first functional component is disabled. In another manner, the output terminal of the phase-locked loop has a control interface, and the control interface is connected to the controller (or the central processing unit). When the controller (or the central processing unit) enables the output of the phase-locked loop through the control interface, the transmission path between the phase-locked loop and each first functional component is enabled. When the controller (or the central processing unit) disables the output of the phase-locked loop through the control interface, the transmission path between the phase-locked loop and each first functional component is disabled.

It may be understood that although a clock control process of the bus is not described in step 11 and step 12, when there is information exchange between the controller, the image signal processor, the artificial intelligence processor, and the memory, the controller may further control a first clock input terminal of a frequency converter corresponding to the bus to be connected to a clock output terminal, so that the bus implements information transmission between the components based on a high-frequency clock signal. After information exchange between the controller, the image signal processor, the artificial intelligence processor, and the memory is completed, the controller may control a second clock input terminal of the frequency converter corresponding to the bus to be connected to the clock output terminal, so that the bus maintains survival based on a low-frequency clock signal, to reduce power consumption of the bus.

It may be learned from the foregoing content description that a refined clock control manner is provided in the foregoing embodiment of this application. In the clock control manner, when the controller uniformly manages operations of components in the standby state, a clock of each component is further adjusted based on a working state of each component. For example, when a component does not work, the controller may directly turn off a clock of the component, or switch the component to a clock of a relatively low frequency, to reduce power consumption of the component. In this manner, the clock of each component is adjusted with reference to the refined clock control manner during standby wakeup, which helps further reduce power consumption of each component in the standby state.

FIG. 5 is merely an example of a standby wakeup process of the image processing apparatus in one period. An entire implementation procedure of standby wakeup of the image processing apparatus is described below. In this procedure, for a standby wakeup process in each period, refer to FIG. 5. This is not repeatedly described in this application.

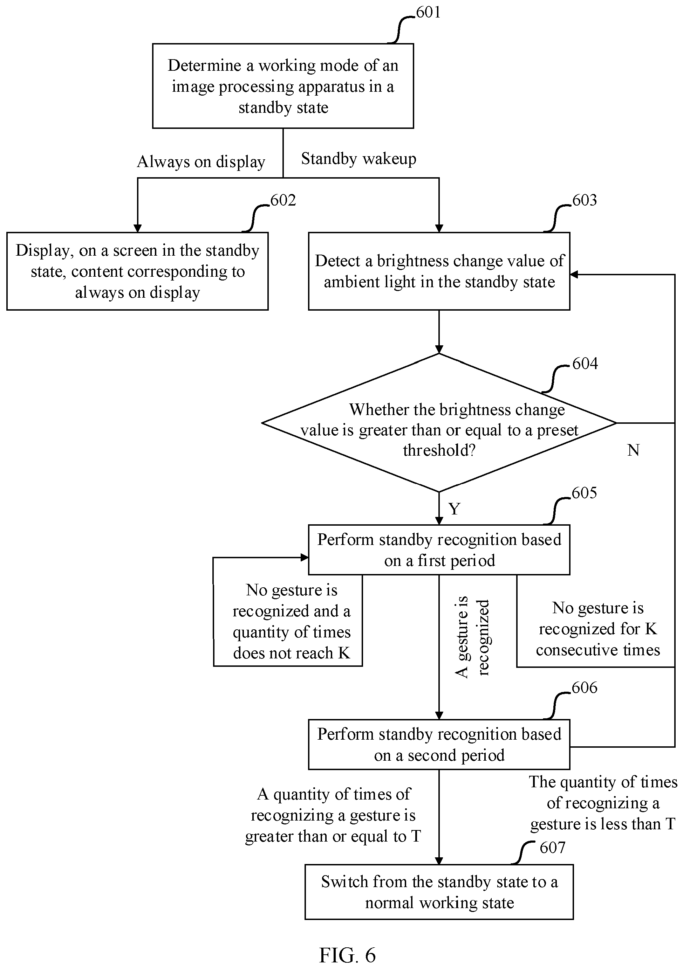

FIG. 6 is an example of a schematic flowchart of a standby wakeup method. The method is described by using gesture-based wakeup as an example. As shown in FIG. 6, the method includes: Step 601: An image processing apparatus determines a working mode of the image processing apparatus in a standby state. If the working mode is always on display, step 602 is performed; or if the working mode is standby wakeup, step 603 is performed.

In an optional implementation, a user may set the working mode in the standby state. For example, when detecting that the standby state is entered, the image processing apparatus may actively provide a standby configuration interface to the user, and the user selects the working mode in the standby state on the standby configuration interface. Alternatively, a default working mode is initially set in the image processing apparatus, and the user may enter a standby configuration interface by using a setting button, to modify the default working mode.

Step 602: The image processing apparatus displays, on a screen in the standby state, display content corresponding to always on display. In an optional implementation, when the user needs to constantly monitor common information such as a clock in the standby state, the user may select always on display as the working mode in the standby state, and the user may further set the content corresponding to always on display. In this way, the image processing apparatus always displays, in an entire process of the standby state, the content that is set by the user and that corresponds to always on display, to meet a requirement of the user and improve user experience.

Step 603: The image processing apparatus detects a brightness change value of ambient light in the standby state. In an optional implementation, if the user has a requirement for reducing power consumption in the standby state, standby wakeup may be selected as the working mode in the standby state. In this case, when the image processing apparatus enters the standby state, an application processor in the image processing apparatus may send a notification message to a controller, to trigger the controller to start a standby wakeup monitoring service. The controller may first switch each frequency converter to a default mode in the standby state based on the standby wakeup monitoring service. When configuring a frequency converter corresponding to an image capture device, the controller needs to first configure, under support of a clock MCLK, the image capture device to switch to the standby mode, and then opens a switch K6 to disable the clock MCLK. In this way, both the image capture device and the switch K6 are switched to the default mode. In addition, the controller (or the application processor) may further power down a standby power-down power supply, to power down each second functional component (including the application processor) in a high power system. In addition, the controller may further turn on a first clock generation system, and turn off a second clock generation system, so that each first functional component in a low power system and the image capture device perform standby wakeup by using a low-frequency first clock signal.

In this embodiment of this application, when the user makes a gesture in front of a screen, the ambient light of the image processing apparatus changes. Therefore, detecting a change status of the ambient light may be used as a prerequisite for standby wakeup. There are a plurality of manners of detecting the ambient light. For example, in a manner, a standby non-power-down power supply and an ambient light sensor (and/or an optical proximity sensor) may be connected, and the standby non-power-down power supply supplies power to the ambient light sensor in the standby state. In this way, the controller may detect the change status of the ambient light in the standby state by controlling the ambient light sensor, to obtain the brightness change value of the ambient light. For another example, in another manner, the controller may directly control the image capture device to capture at least two frames of images, and compare brightness of the at least two frames of images, to determine the brightness change value of the ambient light.

It may be understood that the brightness change value of the ambient light is merely a feature that reflects that there is an object in front of the ambient light sensor. In this embodiment of this application, there is no limitation that only the feature is used to detect the change status of the ambient light. Any feature that can indicate that there is an object in front of the ambient light sensor falls within the protection scope of this application, for example, a temperature, a color difference, or a grayscale.

Step 604: The image processing apparatus determines whether the brightness change value of the ambient light is greater than a preset threshold, and if the brightness change value of the ambient light is greater than the preset threshold, performs step 605, or if the brightness change value of the ambient light is not greater than the preset threshold, performs step 603. In this embodiment of this application, power consumption of approximately 5 MW is required for the image processing apparatus to detect a change of the ambient light, and power consumption of approximately 10 MW is required for performing standby recognition for one time. In this case, the change of the ambient light is detected before standby recognition is performed, which is equivalent to setting a first-level screening condition for standby recognition. Standby recognition is performed only when the screening condition is met, and standby recognition is not performed when the screening condition is not met. The power consumption for detecting the ambient light is less than that for performing standby recognition. Therefore, this manner helps reduce power consumption in the standby state.

Step 605: The image processing apparatus performs standby recognition based on a first period, recognizes one frame of image in each first period, and if the frame of image includes a gesture, performs step 606, if the frame of image does not include a gesture and no gesture is detected in K consecutive first periods, performs step 603, or if the frame of image does not include a gesture and a quantity of periods in which no face is detected does not reach K, performs step 605.

In this embodiment of this application, K may be any positive integer greater than or equal to 2. A value of K may be set by a person skilled in the art based on experience. For example, in consideration of the fact that 1 second may further needs to be consumed from a time when a hand blocks the ambient light sensor to a time when the hand is completely placed in front of the screen, if period duration of the first period is 500 milliseconds, the value of K may be set to 2. When no hand is recognized this time and a quantity of recognition times does not reach 2, recognition may continue until no hand is recognized for two times, and it is determined that the user does not perform a gesture-based wakeup operation. In this manner, the quantity of recognition times is set to provide the user with sufficient time to place the complete hand in front of the screen, and this helps improve recognition accuracy.

Step 606: The image processing apparatus continues to recognize an image based on a second period, recognizes one frame of image in each second period, and if a quantity of times of recognizing a gesture is greater than or equal to T, performs step 607, or if a quantity of times of recognizing a gesture is less than T, performs step 603.

In this embodiment of this application, a value of T may be any positive integer. That a quantity of times of recognizing a gesture is greater than or equal to T may mean that there is a gesture when recognition is performed for T consecutive times, or may mean that there is a gesture for T times when recognition is performed for any quantity of times that is greater than T. When there is a fixed quantity of recognition times, a larger value of T indicates higher accuracy of image recognition, and a smaller value of T indicates lower accuracy of image recognition.

In an optional implementation, the second period may be less than the first period. For example, when the first period is 500 milliseconds, the second period may be 300 milliseconds. In this case, the image processing apparatus continues to recognize an image at a frame rate of 5 frames per second (fps). Alternatively, the second period may be 100 milliseconds. In this case, the image processing apparatus recognizes an image at a frame rate of 10 frames per second (fps). Power consumption of approximately 10 MW is required for recognizing an image based on the first period, and power consumption of approximately 20 MW to 30 MW is required for recognizing an image based on the second period. In this implementation, recognizing an image based on the first period is equivalent to setting a second-level screening condition for standby wakeup. Switching to high-frequency image recognition is performed only after a gesture is recognized in low-frequency image recognition, to further recognize and determine whether there is actually a gesture before the screen. The image processing apparatus is woken up only when there is also a gesture in high-frequency image recognition. It may be learned that in this manner, power consumption of performing image recognition in the standby state can be reduced, and accuracy of standby wakeup can be improved.

Step 607: The image processing apparatus switches from the standby state to a normal working state. It may be understood that in a process of performing step 603 to step 607, if the image processing apparatus receives a wakeup instruction in another manner (for example, the user presses a power button), the image processing apparatus may end a current standby wakeup operation, and directly switch from the standby state to the normal working state.

A power consumption level that can be implemented by using the standby wakeup method in this application is described below by using a specific example. In this example, it is assumed that gaze-based wakeup is performed based on period duration of 200 milliseconds.

Table 2 is an example of a table of power consumption of each first functional component and the image capture device, where a unit of power consumption is MW.

**Table 2**

| Component | Image signal processor | Interface | Artificial intelligence processor | Others (first phase-locked loop, bus, controller, and memory) | Image capture device | Total |
|---|---|---|---|---|---|---|
| Power consumption | 0.3 | 1.5 | 4 | 2 | 10 | 17.8 |

As shown in Table 2, according to the image processing method provided in this application, the total power consumption of standby wakeup performed by each first functional component and the image capture device in one period is only approximately 17.8 MW. In comparison with a solution in which the manner of performing standby wakeup by each functional unit shown in the content description part in FIG. 1 is directly used, power of hundreds of MW can be saved.

Based on Table 2, it is assumed that in a time period (namely, 24 hours) of one day, the image processing apparatus is used for 7 hours when the screen is turned on, is used for 8 hours when the screen is turned off and there is dark light (there is no flash, and therefore level-1 detection is disabled when the screen is turned off and there is dark light, that is, standby wakeup is not performed), and is charged for 1 hour, and therefore duration of using the image processing apparatus when the screen is turned off and there is bright light is 8 hours. When standby wakeup is performed in a case in which the screen is turned off and there is bright light, if the light does not change in 5 hours in the 8 hours, and power consumption of 1.5 mA is consumed in each hour in which the light does not change, power consumption in the 5 hours (unit: h) is approximately as follows:

$$1.5 \text{ mA} \times 5 \text{ h} = 7.5 \text{ mAh}$$

If duration in which the light changes in the 8 hours is calculated as 3 hours, and a supply voltage is 3.8 V, power consumption in the 3 hours is approximately as follows:

$$17.8 \text{ MW}/3.8 \text{ V} \times 3 \text{ h} = 14 \text{ mAh}$$

It may be learned that based on the solution in this application, power consumed for performing standby wakeup in one day is approximately as follows:

$$7.5 \text{ mAh} + 14 \text{ mAh} = 21.5 \text{ mAh}$$

However, based on the solution of performing standby wakeup by each functional unit shown in the content description part in FIG. 1, power consumed for performing standby wakeup in one day needs to be hundreds of mAh or even thousands of mAh. Obviously, the solution in this application can effectively reduce power consumption of the image processing apparatus, and help prolong a standby time of the image processing apparatus.

It should be noted that the image processing apparatus and the image processing method in embodiments of this application may be applied to not only the foregoing shown electronic device, but also a robot or another smart home product, for example, a washer, a liquid crystal television, and a microwave oven. This is not specifically limited.

It should be understood that expressions such as "first" and "second" in the foregoing embodiments are merely used to distinguish between different units, and are not intended to limit a quantity or a purpose of use; and a "connection" should be understood as an electrical connection or electrical coupling, and should not be understood as a connection directly implemented by using a conducting wire, and the "connection" should be understood as a case in which the connection may be indirectly implemented by using another component.

**Claims**

1. An image processing apparatus, comprising:

a first clock generation system, configured to generate a first clock signal at a first frequency;

a second clock generation system, configured to generate a second clock signal at a second frequency, wherein the first frequency is less than the second frequency;

a low power system, comprising a plurality of first functional components, and configured to:

when the image processing apparatus is in a standby state, process image information based on the first clock signal, and trigger the image processing apparatus to switch to a normal working state; and

when the image processing apparatus is in the normal working state, work based on one of the first clock signal and the second clock signal; and

a high power system, comprising a plurality of second functional components, and configured to:

when the image processing apparatus is in the normal working state, work based on the second clock signal,

wherein the plurality of first functional components comprise a controller, an image signal processor, and an artificial intelligence processor, and the plurality of second functional components comprise a central processing unit;

the image signal processor is configured to: when the image processing apparatus is in the standby state, process the image information to obtain processed image information;

the artificial intelligence processor is configured to: when the image processing apparatus is in the standby state, extract a feature of the processed image information, and determine whether the feature matches a target feature, to obtain a matching result;

the controller is configured to send a trigger signal to the central processing unit based on the matching result when the image processing apparatus is in the standby state; and

the central processing unit is configured to switch the image processing apparatus to the normal working state in response to the trigger signal, and

wherein the plurality of second functional components further comprises a digital signal processor, DSP, a graphics processing unit, GPU, and a baseband processor or a secure element, SE, and

wherein the plurality of first functional components and the plurality of second functional components are deployed on a same chip.

2. The image processing apparatus according to claim 1, wherein the switching the image processing apparatus to the normal working state comprises: controlling a screen to be turned on.

3. The image processing apparatus according to claim 1 or 2, wherein the plurality of first functional components further comprise an interface, configured to: when the image processing apparatus is in the standby state, receive the image information from an image capture device, and transmit the image information to the image signal processor.

4. The image processing apparatus according to any one of claims 1 to 3, wherein the plurality of first functional components further comprise a memory, configured to store the processed image information when the image processing apparatus is in the standby state.

5. The image processing apparatus according to any one of claims 1 to 4, wherein the image processing apparatus further comprises a frequency converter system, configured to:

receive the first clock signal from the first clock generation system, perform frequency conversion on the first clock signal to generate a first clock signal obtained through frequency conversion, and provide the first clock signal obtained through frequency conversion to the low power system; and

receive the second clock signal from the second clock generation system, perform frequency conversion on the second clock signal to generate a second clock signal obtained through frequency conversion, and provide the second clock signal obtained through frequency conversion to the low power system or the high power system.

6. The image processing apparatus according to claim 5, wherein the frequency converter system comprises a plurality of frequency converters;

one of the plurality of frequency converters corresponds to one of the plurality of first functional components; and

the frequency converter is configured to: receive the first clock signal, and output the first clock signal obtained through frequency conversion to a corresponding first functional component; or receive the second clock signal, and output the second clock signal obtained through frequency conversion to a corresponding first functional component

7. The image processing apparatus according to claim 6, wherein at least one of the plurality of frequency converters is further configured to: when at least one first functional component corresponding to the at least one frequency converter stops working, disable an output of the at least one frequency converter.

8. The image processing apparatus according to claim 6 or 7, wherein a frequency of the first clock signal obtained through frequency conversion is greater than the first frequency; and
the at least one of the plurality of frequency converters is further configured to:
when the at least one first functional component corresponding to the at least one frequency converter is idle, output the first clock signal at the first frequency to the at least one first functional component.

9. The image processing apparatus according to any one of claims 1 to 8, wherein when the image processing apparatus is in the normal working state, the low power system is specifically configured to: work based on the first clock signal in a first working mode, and work based on the second clock signal in a second working mode.

10. The image processing apparatus according to any one of claims 1 to 9, wherein when the image processing apparatus is in the standby state, the second clock generation system is turned off.

11. An electronic device, comprising an image capture device and the image processing apparatus according to any one of claims 1 to 10.

12. An image processing method, wherein the method comprises:

controlling a first clock generation system to generate a first clock signal at a first frequency;
controlling a second clock generation system to generate a second clock signal at a second frequency, wherein the first frequency is less than the second frequency;
when an image processing apparatus is in a standby state, controlling a low power system to process image information based on the first clock signal and trigger the image processing apparatus to switch to a normal working state, wherein the low power system comprises a plurality of first functional components; and
when the image processing apparatus is in the normal working state, controlling the low power system to work based on one of the first clock signal and the second clock signal, and controlling a high power system to work based on the second clock signal, wherein the high power system comprises a plurality of second functional components,
wherein the plurality of first functional components comprise a controller, an image signal processor, and an artificial intelligence processor, and the plurality of second functional components comprise a central processing unit; and wherein
when the image processing apparatus is in the standby state, processing, by the image signal processor, the image information to obtain processed image information;
when the image processing apparatus is in the standby state, extracting, by the artificial intelligence processor, a feature of the processed image information, and determining whether the feature matches a target feature, to obtain a matching result;
sending, by the controller, a trigger signal to the central processing unit based on the matching result when the image processing apparatus is in the standby state; and
switching, by the central processing unit, the image processing apparatus to the normal working state in response to the trigger signal, and
wherein the plurality of second functional components further comprises a digital signal processor, DSP, a graphics processing unit, GPU, and a baseband processor or a secure element, SE, and
wherein the plurality of first functional components and the plurality of second functional components are deployed on a same chip.

**Patentansprüche**

1. Bildverarbeitungsvorrichtung, umfassend:

ein erstes Takterzeugungssystem, das dazu konfiguriert ist, ein erstes Taktsignal mit einer ersten Frequenz zu erzeugen;

ein zweites Takterzeugungssystem, das dazu konfiguriert ist, ein zweites Taktsignal mit einer zweiten Frequenz zu erzeugen, wobei die erste Frequenz geringer als die zweite Frequenz ist;

ein Niedrigleistungssystem, umfassend eine Vielzahl erster funktionaler Komponenten und zu Folgendem konfiguriert:

wenn sich die Bildverarbeitungsvorrichtung in einem Bereitschaftszustand befindet, Verarbeiten von Bildinformationen basierend auf dem ersten Taktsignal und

Auslösen der Bildverarbeitungsvorrichtung, um in einen normalen Arbeitszustand umzuschalten; und wenn sich die Bildverarbeitungsvorrichtung in dem normalen Arbeitszustand befindet, Arbeiten basierend auf einem des ersten Taktsignals oder des zweiten Taktsignals; und

ein Hochleistungssystem, umfassend eine Vielzahl zweiter funktionaler Komponenten und zu Folgendem konfiguriert:

wenn sich die Bildverarbeitungsvorrichtung in dem normalen Arbeitszustand befindet, Arbeiten basierend auf dem zweiten Taktsignal,

wobei die Vielzahl erster funktionaler Komponenten eine Steuerung, einen Bildsignalprozessor und einen Prozessor für künstliche Intelligenz umfasst und die Vielzahl zweiter funktionaler Komponenten eine zentrale Verarbeitungseinheit umfasst;

der Bildsignalprozessor zu Folgendem konfiguriert ist: wenn sich die Bildverarbeitungsvorrichtung in dem Bereitschaftszustand befindet, Verarbeiten der Bildinformationen, um verarbeitete Bildinformationen zu erlangen;

der Prozessor für künstliche Intelligenz zu Folgendem konfiguriert ist: wenn sich die Bildverarbeitungsvorrichtung in dem Bereitschaftszustand befindet, Extrahieren eines Merkmals der verarbeiteten Bildinformationen und Bestimmen, ob das Merkmal mit einem Zielmerkmal übereinstimmt, um ein Übereinstimmungsergebnis zu erlangen;

die Steuerung dazu konfiguriert ist, ein Auslösesignal an die zentrale Verarbeitungseinheit basierend auf dem Übereinstimmungsergebnis zu senden, wenn sich die Bildverarbeitungsvorrichtung in dem Bereitschaftszustand befindet; und

die zentrale Verarbeitungseinheit dazu konfiguriert ist, die Bildverarbeitungsvorrichtung als Reaktion auf das Auslösesignal in den normalen Arbeitszustand umzuschalten, und

wobei die Vielzahl zweiter funktionaler Komponenten ferner einen digitalen Signalprozessor, DSP, eine Grafikverarbeitungseinheit, GPU, und einen Basisbandprozessor oder ein Sicherheitselement, SE, umfasst und

wobei die Vielzahl erster funktionaler Komponenten und die Vielzahl zweiter funktionaler Komponenten auf einem gleichen Chip eingesetzt werden.

2. Bildverarbeitungsvorrichtung nach Anspruch 1, wobei das Umschalten der Bildverarbeitungsvorrichtung in den normalen Arbeitszustand Folgendes umfasst: Steuern eines Bildschirms, um eingeschaltet zu werden.

3. Bildverarbeitungsvorrichtung nach Anspruch 1 oder 2, wobei die Vielzahl erster funktionaler Komponenten ferner eine Schnittstelle umfasst, die zu Folgendem konfiguriert ist: wenn sich die Bildverarbeitungsvorrichtung in dem Bereitschaftszustand befindet, Empfangen der Bildinformationen von einem Bilderfassungsgerät und Übertragen der Bildinformationen an den Bildsignalprozessor.

4. Bildverarbeitungsvorrichtung nach einem der Ansprüche 1 bis 3, wobei die Vielzahl erster funktionaler Komponenten ferner einen Speicher umfasst, der dazu konfiguriert ist, die verarbeiteten Bildinformationen zu speichern, wenn sich die Bildverarbeitungsvorrichtung in dem Bereitschaftszustand befindet.

5. Bildverarbeitungsvorrichtung nach einem der Ansprüche 1 bis 4, wobei die Bildverarbeitungsvorrichtung ferner ein Frequenzwandlersystem umfasst, das zu Folgendem konfiguriert ist:

Empfangen des ersten Taktsignals von dem ersten Takterzeugungssystem, Durchführen einer Frequenzwandlung an dem ersten Taktsignal, um ein erstes Taktsignal zu erzeugen, das über die Frequenzwandlung erlangt wird, und Bereitstellen des ersten Taktsignals, das über die Frequenzwandlung erlangt wird, an das Niedrigleistungssystem; und

Empfangen des zweiten Taktsignals von dem zweiten Takterzeugungssystem, Durchführen einer Frequenzwandlung an dem zweiten Taktsignal, um ein zweites Taktsignal zu erzeugen, das über die Frequenzwandlung erlangt wird, und Bereitstellen des zweiten Taktsignals, das über die Frequenzwandlung erlangt wird, an das Niedrigleistungssystem oder das Hochleistungssystem.

6. Bildverarbeitungsvorrichtung nach Anspruch 5, wobei das Frequenzwandlersystem eine Vielzahl von Frequenzwandlern umfasst;

einer der Vielzahl von Frequenzwandlern einer der Vielzahl erster funktionaler Komponenten entspricht; und der Frequenzwandler zu Folgendem konfiguriert ist: Empfangen des ersten Taktsignals und Ausgeben des ersten Taktsignals, das über die Frequenzwandlung erlangt wird, an eine entsprechende erste funktionale Komponente; oder Empfangen des zweiten Taktsignals und Ausgeben des zweiten Taktsignals, das über die Frequenzwandlung erlangt wird, an eine entsprechende erste funktionale Komponente.

7. Bildverarbeitungsvorrichtung nach Anspruch 6, wobei mindestens einer der Vielzahl von Frequenzwandlern ferner zu Folgendem konfiguriert ist: wenn mindestens eine erste funktionale Komponente, die dem mindestens einen Frequenzwandler entspricht, zu arbeiten aufhört, Deaktivieren einer Ausgabe des mindestens einen Frequenzwandlers.

8. Bildverarbeitungsvorrichtung nach Anspruch 6 oder 7, wobei eine Frequenz des ersten Taktsignals, das über die Frequenzwandlung erlangt wird, größer als die erste Frequenz ist; und
der mindestens eine der Vielzahl von Frequenzwandlern ferner zu Folgendem konfiguriert ist:
wenn die mindestens eine erste funktionale Komponente, die dem mindestens einen Frequenzwandler entspricht, in einem Leerlauf ist, Ausgeben des ersten Taktsignals mit der ersten Frequenz an die mindestens eine erste funktionale Komponente.

9. Bildverarbeitungsvorrichtung nach einem der Ansprüche 1 bis 8, wobei, wenn sich die Bildverarbeitungsvorrichtung in dem normalen Arbeitszustand befindet, das Niedrigleistungssystem speziell zu Folgendem konfiguriert ist: Arbeiten basierend auf dem ersten Taktsignal in einem ersten Arbeitsmodus und Arbeiten basierend auf dem zweiten Taktsignal in einem zweiten Arbeitsmodus.

10. Bildverarbeitungsvorrichtung nach einem der Ansprüche 1 bis 9, wobei, wenn sich die Bildverarbeitungsvorrichtung in dem Bereitschaftszustand befindet, das zweite Takterzeugungssystem ausgeschaltet ist.

11. Elektronisches Gerät, umfassend ein Bilderfassungsgerät und die Bildverarbeitungsvorrichtung nach einem der Ansprüche 1 bis 10.

12. Bildverarbeitungsverfahren, wobei das Verfahren Folgendes umfasst:

Steuern eines ersten Takterzeugungssystems, um ein erstes Taktsignal mit einer ersten Frequenz zu erzeugen;
Steuern eines zweiten Takterzeugungssystems, um ein zweites Taktsignal mit einer zweiten Frequenz zu erzeugen, wobei die erste Frequenz geringer als die zweite Frequenz ist;
wenn sich eine Bildverarbeitungsvorrichtung in einem Bereitschaftszustand befindet, Steuern eines Niedrigleistungssystems, um Bildinformationen basierend auf dem ersten Taktsignal zu verarbeiten und die Bildverarbeitungsvorrichtung auszulösen, um in einen normalen Arbeitszustand umzuschalten, wobei das Niedrigleistungssystem eine Vielzahl erster funktionaler Komponenten umfasst; und
wenn sich die Bildverarbeitungsvorrichtung in dem normalen Arbeitszustand befindet, Steuern des Niedrigleistungssystems, um basierend auf einem des ersten Taktsignals und des zweiten Taktsignals zu arbeiten, und Steuern eines Hochleistungssystems, um basierend auf dem zweiten Taktsignal zu arbeiten, wobei das Hochleistungssystem eine Vielzahl zweiter funktionaler Komponenten umfasst,
wobei die Vielzahl erster funktionaler Komponenten eine Steuerung, einen Bildsignalprozessor und einen Prozessor für künstliche Intelligenz umfasst und die Vielzahl zweiter funktionaler Komponenten eine zentrale Verarbeitungseinheit umfasst; und
wenn sich die Bildverarbeitungsvorrichtung in dem Bereitschaftszustand befindet, Verarbeiten, durch den Bildsignalprozessor, der Bildinformationen, um verarbeitete Bildinformationen zu erlangen;
wenn sich die Bildverarbeitungsvorrichtung in dem Bereitschaftszustand befindet, Extrahieren, durch den Prozessor für künstliche Intelligenz, eines Merkmals der verarbeiteten Bildinformationen und Bestimmen, ob das Merkmal mit einem Zielmerkmal übereinstimmt, um ein Übereinstimmungsergebnis zu erlangen;
Senden, durch die Steuerung, eines Auslösesignals an die zentrale Verarbeitungseinheit basierend auf dem Übereinstimmungsergebnis, wenn sich die Bildverarbeitungsvorrichtung in dem Bereitschaftszustand befindet; und

Umschalten, durch die zentrale Verarbeitungseinheit, der Bildverarbeitungsvorrichtung in den normalen Arbeitszustand als Reaktion auf das Auslösesignal, und

wobei die Vielzahl zweiter funktionaler Komponenten ferner einen digitalen Signalprozessor, DSP, eine Grafikverarbeitungseinheit, GPU, und einen Basisbandprozessor oder ein Sicherheitselement, SE, umfasst und

wobei die Vielzahl erster funktionaler Komponenten und die Vielzahl zweiter funktionaler Komponenten auf einem gleichen Chip eingesetzt werden.

**Revendications**

1. Appareil de traitement d'image, comprenant :

   un premier système de génération d'horloge, configuré pour générer un premier signal d'horloge à une première fréquence ;

   un second système de génération d'horloge, configuré pour générer un second signal d'horloge à une seconde fréquence, dans lequel la première fréquence est inférieure à la seconde fréquence ;

   un système basse consommation, comprenant une pluralité de premiers composants fonctionnels, et configuré pour :

       lorsque l'appareil de traitement d'image est en état de veille, traiter des informations d'image sur la base du premier signal d'horloge, et déclencher l'appareil de traitement d'images pour commuter à un état de fonctionnement normal ; et

       lorsque l'appareil de traitement d'image est dans l'état de fonctionnement normal, fonctionner sur la base de l'un du premier signal d'horloge et du second signal d'horloge ; et

   un système haute consommation, comprenant une pluralité de seconds composants fonctionnels, et configuré pour :

       lorsque l'appareil de traitement d'image est dans l'état de fonctionnement normal, fonctionner sur la base du second signal d'horloge,

       dans lequel la pluralité de premiers composants fonctionnels comprennent un dispositif de commande, un processeur de signal d'image et un processeur d'intelligence artificielle, et la pluralité de seconds composants fonctionnels comprennent une unité centrale de traitement ;

       le processeur de signal d'image est configuré pour : lorsque l'appareil de traitement d'image est en état de veille, traiter les informations d'image pour obtenir des informations d'image traitées ;

       le processeur d'intelligence artificielle est configuré pour :

           lorsque l'appareil de traitement d'image est en état de veille, extraire une caractéristique des informations d'image traitées, et déterminer si la caractéristique correspond à une caractéristique cible, pour obtenir un résultat de correspondance ;

           le dispositif de commande est configuré pour envoyer un signal de déclenchement à l'unité centrale de traitement sur la base du résultat de correspondance lorsque l'appareil de traitement d'image est en état de veille ; et

           l'unité centrale de traitement est configurée pour commuter l'appareil de traitement d'image vers l'état de fonctionnement normal en réponse au signal de déclenchement, et

           dans lequel la pluralité de seconds composants fonctionnels comprend également un processeur de signal numérique, DSP, une unité de traitement graphique, GPU, et un processeur de bande de base ou un élément sécurisé, SE, et

           dans lequel la pluralité de premiers composants fonctionnels et la pluralité de seconds composants fonctionnels sont déployés sur une même puce.

2. Appareil de traitement d'image selon la revendication 1, dans lequel la commutation de l'appareil de traitement d'image vers l'état de fonctionnement normal comprend : la commande d'un écran à allumer.

3. Appareil de traitement d'image selon la revendication 1 ou 2, dans lequel la pluralité de premiers composants fonctionnels comprennent également une interface, configurée pour : lorsque l'appareil de traitement d'image est dans l'état de veille, recevoir les informations d'image d'un dispositif de capture d'image, et transmettre les informations d'image au processeur de signal d'image.

**4.** Appareil de traitement d'image selon l'une quelconque des revendications 1 à 3, dans lequel la pluralité de premiers composants fonctionnels comprennent également une mémoire, configurée pour stocker les informations d'image traitées lorsque l'appareil de traitement d'image est dans l'état de veille.

**5.** Appareil de traitement d'image selon l'une quelconque des revendications 1 à 4, dans lequel l'appareil de traitement d'image comprend également un système de conversion de fréquence configuré pour :

recevoir le premier signal d'horloge du premier système de génération d'horloge, effectuer une conversion de fréquence sur le premier signal d'horloge pour générer un premier signal d'horloge obtenu par conversion de fréquence, et fournir le premier signal d'horloge obtenu par conversion de fréquence au système basse consommation ; et
recevoir le second signal d'horloge du second système de génération d'horloge, effectuer une conversion de fréquence sur le second signal d'horloge pour générer un second signal d'horloge obtenu par conversion de fréquence, et fournir le second signal d'horloge obtenu par conversion de fréquence au système basse consommation ou au système haute consommation.

**6.** Appareil de traitement d'image selon la revendication 5, dans lequel le système de conversion de fréquence comprend une pluralité de convertisseurs de fréquence ;

l'un de la pluralité de convertisseurs de fréquence correspond à l'un de la pluralité de premiers composants fonctionnels ; et
le convertisseur de fréquence est configuré pour : recevoir le premier signal d'horloge, et émettre le premier signal d'horloge obtenu par conversion de fréquence vers un premier composant fonctionnel correspondant ; ou recevoir le second signal d'horloge, et émettre le second signal d'horloge obtenu par conversion de fréquence vers un premier composant fonctionnel correspondant.

**7.** Appareil de traitement d'image selon la revendication 6, dans lequel au moins un convertisseur de fréquence parmi la pluralité de convertisseurs de fréquence est également configuré pour :
lorsqu'au moins un premier composant fonctionnel correspondant l'au moins un convertisseur de fréquence cesse de fonctionner, désactiver une sortie de l'au moins un convertisseur de fréquence.

**8.** Appareil de traitement d'image selon la revendication 6 ou 7, dans lequel une fréquence du premier signal d'horloge obtenu par conversion de fréquence est supérieure à la première fréquence ; et
l'au moins un de la pluralité de convertisseurs de fréquence est également configuré pour :

lorsque l'au moins un premier composant fonctionnel correspondant à l'au moins un convertisseur de fréquence est inactif, émettre le premier signal d'horloge à la première fréquence vers l'au moins un premier composant fonctionnel.

**9.** Appareil de traitement d'image selon l'une quelconque des revendications 1 à 8, dans lequel, lorsque l'appareil de traitement d'image est dans l'état de fonctionnement normal, le système basse consommation est spécifiquement configuré pour : fonctionner sur la base du premier signal d'horloge dans un premier mode de fonctionnement, et fonctionner sur la base du second signal d'horloge dans un second mode de fonctionnement.

**10.** Appareil de traitement d'image selon l'une quelconque des revendications 1 à 9, dans lequel, lorsque l'appareil de traitement d'image est en état de veille, le second système de génération d'horloge est éteint.

**11.** Dispositif électronique, comprenant un dispositif de capture d'image et l'appareil de traitement d'image selon l'une quelconque des revendications 1 à 10.

**12.** Procédé de traitement d'image, dans lequel le procédé comprend :

la commande d'un premier système de génération d'horloge pour générer un premier signal d'horloge à une première fréquence ;
la commande d'un second système de génération d'horloge pour générer un second signal d'horloge à une seconde fréquence, dans lequel la première fréquence est inférieure à la seconde fréquence ;
lorsqu'un appareil de traitement d'image est en état de veille, la commande d'un système basse consommation pour traiter des informations d'image sur la base du premier signal d'horloge et déclencher l'appareil de traitement d'image pour commuter à un état de fonctionnement normal, dans lequel le système basse consommation comprend une pluralité de premiers composants fonctionnels ; et

lorsque l'appareil de traitement d'image est dans l'état de fonctionnement normal, la commande du système basse consommation pour qu'il fonctionne sur la base de l'un du premier signal d'horloge et du second signal d'horloge, et la commande d'un système haute consommation pour qu'il fonctionne sur la base du second signal d'horloge, dans lequel le système haute consommation comprend une pluralité de seconds composants fonctionnels, dans lequel la pluralité de premiers composants fonctionnels comprennent un dispositif de commande, un processeur de signal d'image, et un processeur d'intelligence artificielle, et la pluralité de seconds composants fonctionnels comprennent une unité centrale de traitement ; et dans lequel

lorsque l'appareil de traitement d'image est en état de veille, le traitement, par le processeur de signal d'image, des informations d'image pour obtenir des informations d'image traitées ;

lorsque l'appareil de traitement d'image est en état de veille, l'extraction, par le processeur d'intelligence artificielle, d'une caractéristique des informations d'image traitées, et le fait de déterminer si la caractéristique correspond à une caractéristique cible, pour obtenir un résultat de correspondance ;

l'envoi, par le dispositif de commande, d'un signal de déclenchement à l'unité centrale de traitement sur la base du résultat de correspondance lorsque l'appareil de traitement d'image est en état de veille ; et

la commutation, par l'unité centrale de traitement, de l'appareil de traitement d'image vers l'état de fonctionnement normal en réponse au signal de déclenchement, et

dans lequel la pluralité de seconds composants fonctionnels comprend également un processeur de signal numérique, DSP, une unité de traitement graphique, GPU, et un processeur de bande de base ou un élément sécurisé, SE, et

dans lequel la pluralité de premiers composants fonctionnels et la pluralité de seconds composants fonctionnels sont déployés sur une même puce.

Electronic device 100

Antenna 1

Antenna 2

| Mobile communication module<br>2G/3G/4G/5G<br>[150] | Wireless communication module<br>BT/WLAN/GNSS/NFC/IR/FM<br>[160] |

Speaker
[170A]

Receiver
[170B]

Microphone
[170C]

Headset jack
[170D]

Audio module [170]

Displays 1 to N [194]

Cameras 1 to N [193]

Indicator [192]

Motor [191]

Button [190]

Internal memory [121]

SIM card interfaces 1
to N [195]

External memory
interface [120]

USB port [130]

Charging
input

Charging
management
module
[140]

Power
management
module [141]

Battery [142]

Processor

[110]

Sensor module [180]

Pressure sensor
[180A]

Gyroscope sensor
[180B]

Barometric pressure
sensor [180C]

Magnetic sensor
[180D]

Acceleration sensor
[180E]

Distance sensor
[180F]

Optical proximity
sensor [180G]

Fingerprint sensor
[180H]

Temperature sensor
[180J]

Touch sensor
[180K]

Ambient light
sensor [180L]

Bone conduction
sensor [180M]

FIG. 1

FIG. 2

FIG. 3

FIG. 4

EP 4 198 688 B1

It is assumed that period duration is 100 ms

FIG. 5

601

Determine a working mode of an image processing apparatus in a standby state

Always on display          Standby wakeup

602

Display, on a screen in the standby state, content corresponding to always on display

603

Detect a brightness change value of ambient light in the standby state

604

Whether the brightness change value is greater than or equal to a preset threshold?

N

Y

605

Perform standby recognition based on a first period

No gesture is recognized and a quantity of times does not reach K

A gesture is recognized

No gesture is recognized for K consecutive times

606

Perform standby recognition based on a second period

A quantity of times of recognizing a gesture is greater than or equal to T

The quantity of times of recognizing a gesture is less than T

607

Switch from the standby state to a normal working state

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110297665 A
- US 2020042683 A